(19) Europäisches Patentamt
European Patent Office
Office européen des brevets

(11) **EP 4 184 193 B1**

(12) **FASCICULE DE BREVET EUROPEEN**

(45) Date de publication et mention
de la délivrance du brevet:
**01.05.2024 Bulletin 2024/18**

(21) Numéro de dépôt: **22206672.2**

(22) Date de dépôt: **10.11.2022**

(51) Classification Internationale des Brevets (IPC):
**G01S 5/02** *(2010.01)* **G01S 13/76** *(2006.01)*
**G01S 7/40** *(2006.01)*

(52) Classification Coopérative des Brevets (CPC):
**G01S 13/765; G01S 5/0269; G01S 5/0294;
G01S 7/40**

(54) **PROCÉDÉ DE DÉTERMINATION D'UNE DISTANCE CORRIGÉE**

VERFAHREN ZUR BESTIMMUNG EINES KORRIGIERTEN ABSTANDES

METHOD FOR DETERMINING A CORRECTED DISTANCE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **18.11.2021 FR 2112172**

(43) Date de publication de la demande:
**24.05.2023 Bulletin 2023/21**

(73) Titulaire: **Commissariat à l'énergie atomique
et aux énergies alternatives
75015 Paris (FR)**

(72) Inventeur: **VILLIEN, Christophe
38054 GRENOBLE CEDEX 09 (FR)**

(74) Mandataire: **INNOV-GROUP
310, avenue Berthelot
69372 Lyon Cedex 08 (FR)**

(56) Documents cités:
**WO-A1-2021/143920 US-A1- 2003 216 865**

• **DI PIETRA VINCENZO ET AL: "Loosely Coupled
GNSS and UWB with INS Integration for
Indoor/Outdoor Pedestrian Navigation",
SENSORS, vol. 20, no. 21, 5 novembre 2020
(2020-11-05), page 6292, XP055928238, DOI:
10.3390/s20216292**
• **WENDA ZHAO ET AL: "Learning-based Bias
Correction for Time Difference of Arrival
Ultra-wideband Localization of
Resource-constrained Mobile Robots",
ARXIV.ORG, CORNELL UNIVERSITY LIBRARY,
201 OLIN LIBRARY CORNELL UNIVERSITY
ITHACA, NY 14853, 2 mars 2021 (2021-03-02),
XP081904570,**

**Description**

L'invention concerne un procédé de détermination d'une distance corrigée entre un émetteur-récepteur mobile fixé sur un véhicule et un émetteur-récepteur fixe.

L'invention concerne également :

- un procédé de localisation d'un véhicule mettant en oeuvre le procédé de détermination d'une distance corrigée, et
- un système de détermination d'une distance corrigée.

De tels procédés de détermination d'une distance sont par exemple mis en oeuvre dans des procédés de localisation d'un véhicule. Un tel procédé de localisation est par exemple décrit dans l'article suivant : V. Di Pietra et al. : "Loosely Coupled GNSS and UWB with INS Intégration for Indoor/Outdoor Pedestrian Navigation", Sensors, 5/11/2020.

Plus précisément, dans de tels procédés de localisation, la distance entre les émetteurs-récepteurs fixe et mobile est utilisée pour corriger une position estimée du véhicule à l'aide d'autres capteurs. Ainsi, plus la précision sur la distance est bonne plus la précision sur la position du véhicule est améliorée.

La distance entre les émetteurs-récepteurs fixe et mobile est obtenue à partir des instants d'émission et de réception de signaux radio échangés entre ces émetteurs-récepteurs. Ces signaux radio sont des ondes électromagnétiques qui se propagent à la vitesse de la lumière. Ainsi, même une très petite erreur sur la mesure de ces instants d'émission et de réception se traduit par une erreur de plusieurs dizaines de centimètres sur la distance déterminée.

Pour remédier à ce problème, il a été proposé de corriger une distance brute, calculée seulement à partir des instants d'émission et de réception mesurés, en y ajoutant un coefficient de correction. La difficulté est alors que la valeur de ce coefficient de correction dépend de plusieurs paramètres dont notamment :

- l'orientation relative de l'antenne de l'émetteur-récepteur mobile par rapport à l'antenne de l'émetteur-récepteur fixe,
- la présence d'éventuels d'éléments pouvant perturber la propagation du signal, notamment des éléments métalliques, le long du parcours des signaux radio échangés, et
- la puissance des signaux radio reçus par les émetteurs-récepteurs fixe et mobile.

Une variation de la puissance des signaux radio reçus par les émetteurs-récepteurs fixe et mobile induit généralement une variation des délais dans le mécanisme de détection du temps d'arrivée au sein du récepteur.

Il est donc difficile de construire une fonction de correction qui retourne la valeur d'un tel coefficient de correction à partir de la position et de l'orientation actuelles du véhicule par rapport à l'émetteur-récepteur fixe. À cause de cela, il existe principalement deux stratégies possibles. La première stratégie consiste à utiliser une fonction de correction complexe et précise mais qui est difficile à mettre en oeuvre et longue à exécuter. En particulier, une telle fonction de correction est difficile à mettre en oeuvre car elle comporte de très nombreux paramètres et qu'il est difficile de régler précisément chacun de ces paramètres. La seconde stratégie consiste, à l'inverse, à utiliser une fonction de correction simple à mettre en oeuvre et rapide à exécuter. Toutefois, la simplification de la mise en oeuvre de la fonction de correction se fait au détriment de la précision.

De l'état de la technique relatif à ces problématiques peut être trouvé dans les documents suivant :

- Whenda ZHAO et Al : « Learning-based Bias Correction for Time Différence of Arrival Ultra-wideband Localization of Resource constrrained Mobile Robots », Cornell University Library, 2/03/2021,
- WO2021143920A1, et
- US2003216865A1.

L'invention vise à remédier à cette contradiction en proposant un procédé de détermination de la distance entre les émetteurs-récepteurs fixe et mobile dans lequel la mise en oeuvre de la fonction de correction peut être à la fois simple et rapide sans pour autant nécessairement dégrader la précision de la distance déterminée.

Elle a donc pour objet un tel procédé de détermination d'une distance conforme à la revendication 1.

L'invention a également pour objet un procédé de localisation d'un véhicule mettant en oeuvre le procédé ci-dessus de détermination d'une distance.

Enfin, l'invention a également pour objet un système de détermination d'une distance conforme à la revendication 11.

L'invention sera mieux comprise à la lecture de la description qui va suivre, donnée uniquement à titre d'exemple non limitatif et faite en se référant aux dessins sur lesquels :

- la figure 1 est une illustration schématique d'un véhicule contraint de se déplacer le long d'une trajectoire,

- la figure 2 est une illustration schématique d'un système de localisation du véhicule de la figure 1 ;
- la figure 3 est une illustration schématique de différents modules logiciels mis en oeuvre dans le système de la figure 2,
- la figure 4 est un organigramme d'un procédé de localisation du véhicule de la figure 1 à l'aide du système de la figure 2.

Dans ces figures, les mêmes références sont utilisées pour désigner les mêmes éléments.

Dans la suite de cette description, les caractéristiques et fonctions bien connues de l'homme du métier ne sont pas décrites en détail. En particulier, pour les connaissances générales de l'homme du métier concernant les systèmes de localisation d'un véhicule à l'aide d'une unité de navigation inertielle, il est renvoyé, par exemple, à la thèse suivante : S. Godha, "Performance Evaluation of Low Cost MEMS-Based IMU Integrated With GPS for Land Vehicle Navigation Application", PhD report, 2006. Par la suite, cette thèse est désignée par l'expression "Godha2006"..

Dans cette description, un exemple détaillé de mode de réalisation est d'abord décrit dans le chapitre I en référence aux figures. Ensuite, dans le chapitre II suivant, des variantes de ce mode de réalisation sont présentées. Enfin, les avantages des différents modes de réalisation sont présentés dans un chapitre III.

Chapitre I : Exemple de mode de réalisation

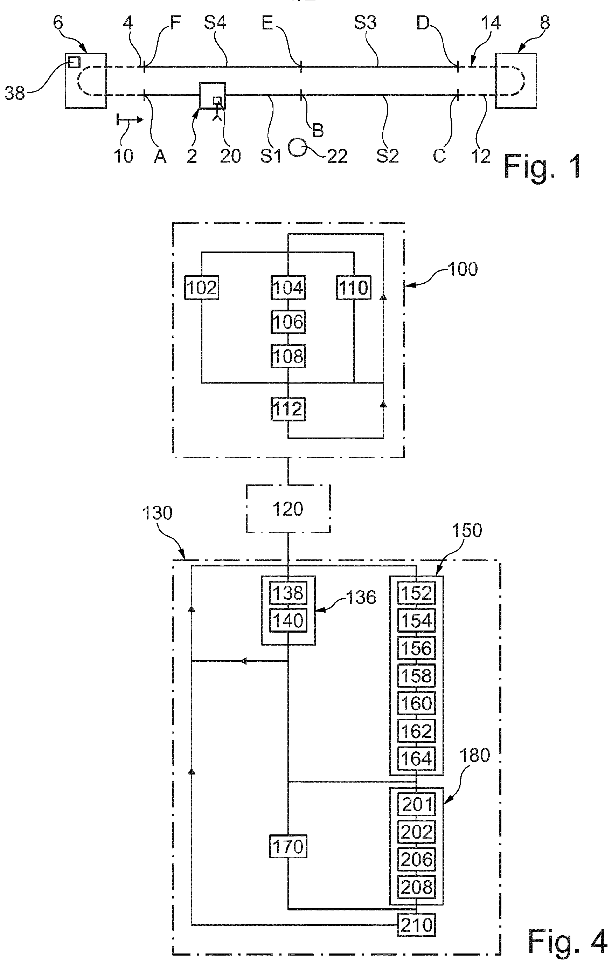

La figure 1 représente un véhicule 2 capable de se déplacer le long de chacun des segments de trajectoire d'un ensemble prédéterminé de plusieurs segments de trajectoire. Chaque segment débute en un point, appelé par la suite "point de départ" et se termine par un point appelé par la suite "point d'arrivée". La portion de trajectoire qui relie les points de départ et d'arrivée du segment est connue à l'avance et fixe. Le véhicule 2 est contraint, par des moyens mécaniques ou électronique, de se déplacer seulement le long des segments de ce groupe.

Par exemple, dans cet exemple de mode de réalisation, le véhicule 2 est une télécabine suspendue à un câble 4. Sur la figure 1, des portions du câble sont représentées en pointillées pour indiquer que seule une partie du câble 4 a été représentée. Le câble 4 forme une boucle qui s'étend entre une station 6 de départ et une station 8 d'arrivée. Le câble 4 est entraîné en rotation par un moteur dans le sens indiqué par la flèche 10. La rotation du câble 4 entraîne le déplacement du véhicule 2 entre les stations 6 et 8 le long d'une trajectoire en forme de boucle imposée par le câble 4. Dans ce contexte, la trajectoire du véhicule 2 est considérée comme étant confondue avec la trajectoire du câble 4.

La trajectoire du véhicule 2 comporte ici une portion montante 12 qui va de la station 6 jusqu'à la station 8 et une portion descendante 14 qui va de la station 8 jusqu'à la station 6. Ici, ces portions montante 12 et descendante 14 ne sont pas confondues.

Pour localiser précisément le véhicule 2 le long de sa trajectoire, le véhicule 2 comporte un émetteur-récepteur radio 20 embarqué dans ce véhicule. Un ou plusieurs émetteurs-récepteurs fixes situés le long de la trajectoire du véhicule 2 sont également fournis. Par exemple, les émetteurs-récepteurs fixes sont disposés à intervalle régulier le long de la portion montante 12. Sur la figure 1, un seul émetteur-récepteur fixe 22 a été représenté.

Ce qui est décrit par la suite dans le cas particulier de cet émetteur-récepteur 22 s'applique à l'identique à tous les autres émetteurs-récepteurs fixes disposés le long de la trajectoire du véhicule 2.

L'émetteur-récepteur 22 est immobile et sa position dans un repère terrestre $R_T$ est connue à l'avance et ne change pas. Ici, le repère terrestre $R_T$ est fixé sans aucun degré de liberté à la terre. Le repère $R_T$ comporte trois axes typiquement orthogonaux entre eux. Par exemple, ici, le repère $R_T$ est le repère connu sous le terme de repère ECEF ("Earth Centered, Earth fixed").

Sur la figure 1, seuls quatre segments S1, S2, S3 et S4 de trajectoire ont été représentés. Les segments S1 et S2 appartiennent à la portion montante 12 de la trajectoire alors que les segments S3 et S4 appartiennent à la portion descendante 14 de la trajectoire. Le segment S1 s'étend depuis un point de départ A jusqu'à un point d'arrivée B. Le segment S2 s'étend depuis le point B jusqu'à un point C d'arrivée. Le segment S3 s'étend depuis un point D de départ jusqu'à un point E d'arrivée. Le segment S4 s'étend depuis le point E jusqu'à un point F d'arrivée. Dans ce mode de réalisation, les points d'arrivée et de départ des segments S1 et S2 sont confondus. De même, les points d'arrivée et de départ des segments S3 et S4 sont confondus.

Ici, les points B et E sont les points, respectivement, des parties montante 12 et descendante 14, les plus proches de l'émetteur-récepteur 22.

Quelle que soit la position du véhicule sur l'un quelconque des segments S1 à S4, les émetteurs-récepteurs fixe et mobile sont capables d'échanger entre eux des trames d'informations permettant de mesurer la distance qui les sépare. A cause de cela, par la suite, les segments S1 à S4 sont dits "associés" à l'émetteur-récepteur fixe 22.

Typiquement, le déplacement du véhicule 2 est piloté à partir d'un poste 38 de pilotage. Ici, ce poste 38 est situé dans la station 6 de départ.

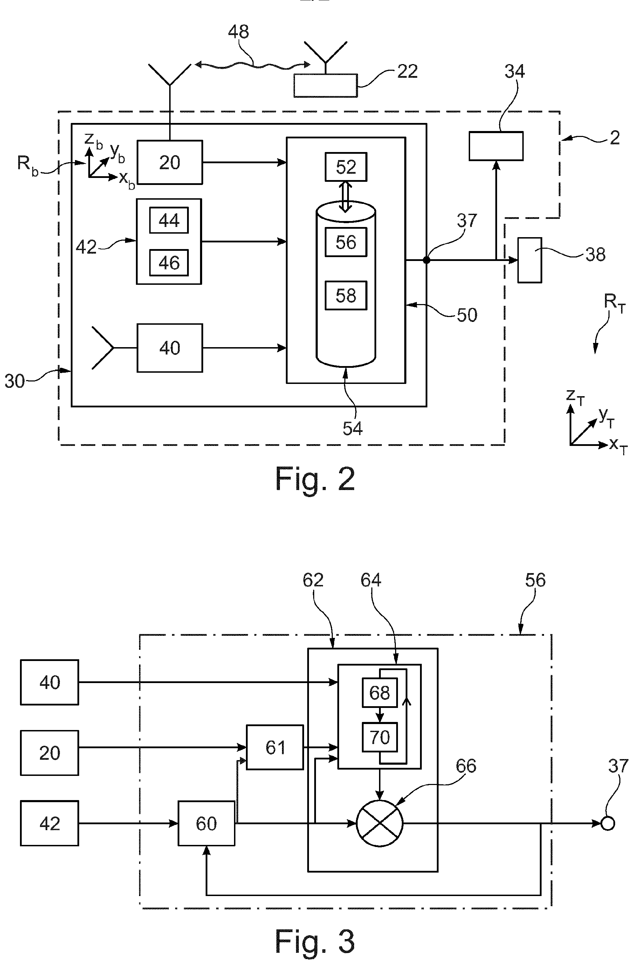

La figure 2 représente plus en détail le véhicule 2 et notamment un système 30 de localisation du véhicule 2 embarqué dans ce véhicule.

Le système 30 est apte à déterminer la position, l'orientation et la vitesse du véhicule 2 dans le repère terrestre

$R_T$. Pour cela, un repère mobile $R_b$ fixé sans aucun degré de liberté au châssis du véhicule 2 est défini. Ce repère $R_b$ comporte trois axes orthogonaux entre eux notés respectivement $x_b$, $y_b$ et $z_b$. Classiquement, lorsque le véhicule 2 se déplace horizontalement, les axes $x_b$ et $y_b$ sont dans un plan horizontal et l'axe $z_b$ est vertical. Ici, l'axe $x_b$ est orienté et pointe dans la direction vers laquelle se déplace le véhicule lorsque celui-ci se déplace en marche avant.

Ici, la position du véhicule 2 dans le repère $R_T$ est exprimée par des coordonnées de l'origine du repère $R_b$ dans le repère $R_T$.

L'orientation du véhicule 2 est exprimée par l'angle $\psi$ de lacet (« yaw angle » en anglais), l'angle $\theta$ de tangage (« pitch angle » en anglais) et l'angle $\varphi$ de roulis (« roll angle » en anglais) du repère $R_b$ définis par rapport à un repère dit de "navigation". En pratique, le plus souvent, l'orientation du véhicule se présente sous la forme d'une matrice d'orientation à partir de laquelle il est possible de déduire l'angle de lacet, l'angle de tangage et l'angle de roulis du véhicule. L'orientation du véhicule peut aussi se présenter sous la forme d'un vecteur comportant directement l'angle de lacet, l'angle de tangage et l'angle de roulis du véhicule. Par la suite, on considère que ces deux cas de figures sont équivalents et donc que l'orientation du véhicule comporte l'angle de lacet, l'angle de tangage et l'angle de roulis du véhicule à partir du moment où ces trois angles peuvent être déduits directement d'une matrice ou d'un vecteur.

La position, l'orientation et la vitesse déterminées par le système 30 sont délivrées sur une sortie 37. Par la suite, la position, l'orientation et la vitesse délivrées sur la sortie 37 par le système 30 pour un instant $t_k$ sont notés, respectivement, P(k), O(k) et V(k).

La sortie 37 est par exemple raccordée à une interface homme-machine 34 logée dans le véhicule 2 est qui affiche la position, l'orientation et la vitesse déterminées par le système 30. La sortie 37 peut aussi être raccordée au poste 38 de pilotage par l'intermédiaire d'une liaison sans fil ou d'une liaison filaire. Dans ce dernier cas, la position, l'orientation et la vitesse déterminées par le système 30 sont automatiquement converties en commandes de pilotage du moteur d'entraînement du câble 4.

Le système 30 comporte une unité 40 de géolocalisation par satellite, une unité 42 de mesure inertielle et l'émetteur-récepteur 20.

L'unité 40 est connue sous l'acronyme GNSS (« *Global Navigation Satellite System* »). A partir des signaux satellitaires qu'elle reçoit, l'unité 40 génère des signaux représentatifs de la position et de la vitesse du véhicule dans le repère $R_T$. L'unité 40 actualise ses mesures à une fréquence $F_{40}$. Classiquement, la fréquence $F_{40}$ est comprise entre 0,1 Hz et 20 Hz.

L'unité 42 est connue sous l'acronyme IMU (« *Inertial Measurement Unit* »). L'unité 42 comporte notamment un accéléromètre triaxe 44 et un gyromètre triaxe 46. Grâce à ces capteurs, l'unité 42 est capable de mesurer la variation de l'orientation, de la position et de la vitesse du véhicule 2. Ici, les axes de mesure de l'accéléromètre 44 et du gyromètre 46 sont confondus, respectivement, avec les axes $x_b$, $y_b$ et $z_b$ du repère $R_b$. De plus, l'accéléromètre 44 est agencé de manière à ce qu'une mesure positive de l'accélération du véhicule 2 le long de l'axe $x_b$ signifie que le véhicule 2 accélère en se déplaçant en marche avant.

L'unité 42 actualise les mesures de l'accélération et de la vitesse à une fréquence élevée $F_{42}$. Classiquement la fréquence $F_{42}$ est comprise entre 20 Hz et 2000 Hz. Par exemple, ici, la fréquence $F_{42}$ est égale à 200 Hz.

L'émetteur-récepteur 20 échange des trames d'informations avec l'émetteur-récepteur 22 par l'intermédiaire d'une liaison radio sans fil 48. Ces trames d'informations sont échangées notamment pour mesurer la distance qui sépare ces émetteurs-récepteurs 20, 22 à partir des temps de vol de ces trames d'informations. Pour cela, ici, les émetteurs-récepteurs 20, 22 sont des émetteurs-récepteurs ultra-large bande ou UWB ("Ultra Wide Band"). Le terme "émetteur-récepteur ultra-large bande" ou "émetteur-récepteur UWB" désigne ici un émetteur-récepteur qui utilise une large bande de fréquences pour envoyer et recevoir les trames d'informations. Une "large" bande de fréquences est une bande de fréquences dont la largeur est supérieure à $0,2f_c$, où $f_c$ est la fréquence médiane de cette bande de fréquences. Typiquement, une large bande de fréquences a une largeur supérieure à 250 MHz ou même supérieure à 400 MHz.

La mesure d'une distance entre les émetteurs-récepteurs 20, 22 nécessite l'échange de plusieurs trames d'informations entre ces émetteurs-récepteurs 20, 22 et la mesure des instants d'émission et de réception de ces trames d'informations. Cet échange de trames d'informations est répété à une fréquence $F_{20}$ pour réactualiser à cette fréquence la mesure de la distance. La fréquence $F_{20}$ est plus petite que la fréquence $F_{42}$. Typiquement, la fréquence $F_{20}$ est dix ou cinquante fois plus petite que la fréquence $F_{42}$. Classiquement, la fréquence $F_{20}$ est comprise entre 0,1 Hz et 20 Hz. Ici, les instants d'émission et de réception des trames d'informations sont obtenus par l'émetteur-récepteur 20 logé dans le véhicule 2.

Pour déterminer la position, l'orientation et la vitesse du véhicule 2 à partir des mesures des unités 40 et 42 et des instants d'émission et de réception obtenus par l'émetteur-récepteur 20, le système 30 comporte un calculateur électronique programmable 50. Ce calculateur 50 est apte à acquérir les mesures des unités 40 et 42 et les instants d'émission et de réception obtenus par l'émetteur-récepteur 20. Ensuite, à partir de ces mesures, le calculateur 50 détermine la position, l'orientation et la vitesse du véhicule 2 dans le repère $R_T$. Le calculateur 50 comporte un microprocesseur 52 et une mémoire 54 comportant les instructions et les données nécessaires à la mise en oeuvre du procédé décrit en référence à la figure 4.

Plus précisément, la mémoire 54 comporte les instructions d'un module logiciel 56 apte à déterminer la position, l'orientation et la vitesse du véhicule 2 à partir des mesures acquises lorsqu'il est exécuté par le microprocesseur 52. Ici, le module 56 implémente notamment un algorithme de fusion qui établit, à partir d'une précédente estimation de la position, de l'orientation et de la vitesse du véhicule 2 et de nouvelles mesures acquises depuis cette précédente estimation, une nouvelle estimation de la position, de l'orientation et de la vitesse du véhicule 2. Typiquement, l'algorithme de fusion établit également des marges d'erreur sur chaque nouvelle estimation.

Les principes généraux des algorithmes de fusion sont bien connus de l'homme du métier. Par exemple, le lecteur intéressé peut encore une fois se référer à la thèse Godha2006 précédemment citée. Typiquement, cet algorithme de fusion implémente un ou plusieurs filtres de Kalman. Ici, le module 56 implémente une architecture connue sous le terme de "en boucle fermée" ("closed loop intégration scheme" ou "closed loop approach" en anglais).

Ici, la mémoire 54 comporte également une table 58 qui à chaque segment Sn associe une fonction $f_{Sn}(d)$ de correction respective, où l'indice Sn est l'identifiant d'un segment parmi les segments S1 à S4.

La figure 3 représente plus en détail l'architecture du module 56. Le module 56 comporte :

- un sous-module 60 d'intégration de mesure inertielle,
- un sous-module 61 de calcul d'une distance corrigée entre les émetteurs-récepteurs 20, 22 à partir des instants d'émission et de réception obtenus par l'émetteur-récepteur 20, et
- un sous-module 62 de correction.

Les principes généraux de fonctionnement des sous-modules 60 et 62 sont connus. Par exemple, pour une description détaillée de ces principes généraux, le lecteur peut consulter le chapitre 4 de la thèse Godha2006. Ainsi, par la suite, seuls les détails spécifiques à l'invention sont décrits en détail.

Le sous-module 60 est connu sous le terme anglais de "Mechanization". Pour chaque instant $t_k$, le sous-module 60 construit une estimation brute d'une position $P_e(k)$, d'une orientation $O_e(k)$ et d'une vitesse $V_e(k)$ du véhicule 2. Dans ce texte, le symbole "k" est le numéro d'ordre de l'instant $t_k$ dans la suite $\{0, t_1, t_2, ..., t_{k-1}, t_k, ...\}$ ordonnée temporellement des instants $t_k$. On note k-1 le numéro d'ordre de l'instant $t_{k-1}$ qui précède immédiatement l'instant $t_k$. Les position $P_e(k)$, orientation $O_e(k)$ et vitesse $V_e(k)$ du véhicule 2 sont chacune un vecteur comportant trois coordonnées. Les coordonnées de la position $P_e(k)$ dans le repère $R_T$ sont notées $x_e(k)$, $y_e(k)$ et $z_e(k)$. Les coordonnées de l'orientation $O_e(k)$ sont notées $\psi_e(k)$, $\theta_e(k)$ et $\varphi_e(k)$ et les coordonnées de la vitesse $V_e(k)$ sont notées $Vx_e(k)$, $Vy_e(k)$ et $Vz_e(k)$.

La fréquence des instants $t_k$ est inférieure ou égale à la fréquence $F_{42}$. Ici, la fréquence des instants $t_k$ est égale à la fréquence $F_{42}$.

Le sous-module 60 construit la position $P_e(k)$, l'orientation $O_e(k)$ et la vitesse $V_e(k)$ à partir :

- de la précédente position P(k-1), de la précédente orientation O(k-1) et de la précédente vitesse V(k-1) déterminées pour le véhicule 2 à l'instant $t_{k-1}$ par le système 30 et délivrées sur la sortie 37, et
- des mesures de l'accéléromètre 44 et du gyromètre 46 acquises par le sous-module 60 à l'instant $t_k$.

La combinaison du sous-module 60 et de l'unité 42 forme ce qui est connu sous l'acronyme INS (« Inertial Navigation System » ).

Le sous-module 61 acquière les instants d'émission et de réception obtenus par l'émetteur-récepteur 20 et la dernière position du véhicule 2 estimée par le sous-module 60. Ensuite, le sous-module 61 délivre au sous-module 62 une distance corrigée calculée à partir des instants d'émission et de réception acquis et de la dernière position du véhicule 2 acquise. Le fonctionnement détaillé de ce sous-module 61 est décrit en référence à la figure 4.

A certains instants $t_k$ particuliers, le sous-module 62 corrige la position $P_e(k)$, l'orientation $O_e(k)$ et la vitesse $V_e(k)$ construites par le sous-module 60 pour cet instant $t_k$ afin d'obtenir une position corrigée $P_c(k)$, une orientation corrigée $O_c(k)$ et une vitesse corrigée $V_c(k)$ pour cet instant $t_k$. Par la suite, ces instants $t_k$ particuliers sont appelés "instants $t_m$". Le symbole "m" est égal au numéro d'ordre d'un 'instant $t_k$ particulier dans la suite $\{0, t_1, t_2, ..., t_{k-1}, t_k, ...\}$. Chaque numéro d'ordre m est donc égal à un numéro d'ordre k respectif. Ainsi, la position $P_e(m)$, l'orientation $O_e(m)$ et la vitesse $V_e(m)$ sont égales, respectivement, à la position $P_e(k)$, l'orientation $O_e(k)$ et la vitesse $V_e(k)$ construites pour l'instant $t_k$ égal à l'instant $t_m$. La suite $\{0, t_1, t_2, ..., t_{m-1}, t_m, ...\}$ des instants $t_m$ est un sous-ensemble de la suite $\{0, t_1, t_2, ..., t_{k-1}, t_k, ...\}$. Ainsi, la correction par le sous-module 62 n'est pas réalisée pour chaque instant $t_k$ mais seulement pour une partie d'entre eux. A chaque instant $t_m$, le sous-module 62 combine la position $P_e(m)$, l'orientation $O_e(m)$ et la vitesse $V_e(m)$ avec des coefficients de correction respectifs pour obtenir la position corrigée $P_c(m)$, l'orientation corrigée $O_c(m)$ et la vitesse corrigée $V_c(m)$. Aux instants $t_m$, c'est la position corrigée $P_c(m)$, l'orientation corrigée $O_c(m)$ et la vitesse corrigée $V_c(m)$ qui sont délivrés sur la sortie 37 et non pas la position $P_e(m)$, l'orientation $O_e(m)$ et la vitesse $V_e(m)$. Les coefficients de correction sont mis à jour en fonction des mesures de l'unité 40 et de la distance corrigée déterminée par le sous-module 61. Les coefficients de corrections sont donc mis à jour à une fréquence inférieure à la

fréquence $F_{42}$.

Le sous-module 62 acquière les mesures de l'unité 40 à une fréquence inférieure ou égale à la fréquence $F_{42}$. Ici, la fréquence d'acquisition des mesures de l'unité 40 est égale à la fréquence $F_{40}$. Par la suite, on note $tg_i$ les instants d'acquisition d'une nouvelle mesure de l'unité 40. Ces instants $tg_i$ forment une suite $\{0, tg_1, tg_2, ..., tg_{i-1}, tg_i, ...\}$ ordonnée temporellement d'instants $tg_i$. Le symbole "i" désigne le numéro d'ordre de l'instant $tg_i$ dans cette suite. Le sous-module 62 met à jour les coefficients de correction à chaque fois qu'une nouvelle mesure de l'unité 40 est acquise et donc pour chaque instant $tg_i$. Les instants $tg_i$ sont moins fréquents que les instants $t_k$.

Le sous-module 62 acquière aussi la distance corrigée, délivrée par le sous-module 61, à une fréquence inférieure ou égale à la fréquence $F_{42}$. Ici, la fréquence d'acquisition de la distance corrigée est égale à la fréquence $F_{20}$. Par la suite, on note $to_j$ les instants d'acquisition de chaque nouvelle distance corrigée. On note également $dc_j$ la distance corrigée acquise à l'instant $to_j$. Le symbole "j" est le numéro d'ordre de l'instant $to_j$ dans la suite $\{0, to_1, to_2, ..., to_{j-1}, to_j, ...\}$ ordonnée temporellement des instants $to_j$. Le sous-module 62 met aussi à jour les coefficients de correction à chaque fois qu'une nouvelle distance corrigée $dc_j$ est acquise et donc pour chaque instant $to_j$. Puisque la fréquence $F_{20}$ est inférieure à la fréquence $F_{42}$, il existe systématiquement plusieurs instants $t_k$ entre les instants $to_{j-1}$ et $to_j$.

Par la suite, on considère que les suites $\{0, tg_1, tg_2, ..., tg_{i-1}, tg_i, ...\}$ et $\{0, to_1, to_2, ..., to_{j-1}, to_j, ...\}$ sont toutes les deux des sous-ensembles de la suite $\{0, t_1, t_2, ..., t_{k-1}, t_k, ...\}$. Ainsi, chaque instants $tg_i$ et $to_j$ correspond à un instant $t_k$ respectif de la suite $\{0, t_1, t_2, ..., t_{k-1}, t_k, ...\}$. De plus, dans ce mode de réalisation, les instants $tg_i$ et $to_j$ sont distincts. Autrement dit, à un instant $tg_i$ où la mesure de l'unité 40 est acquise, aucune nouvelle distance corrigée n'est acquise et vice-versa. Enfin, dans ce texte, les instants $t_m$ sont égaux aux instants auxquels le sous-module 62 acquière soit une mesure de l'unité 40 soit une nouvelle distance corrigée.

Pour mettre à jour les coefficients de corrections en fonction des mesures de l'unité 40 et de la distance corrigée, le sous-module 62 comporte un filtre de Kalman 64. Pour combiner les coefficients de corrections aux estimations brutes délivrées par le sous-module 60, le sous-module 62 comporte aussi un additionneur 66.

Ici, le filtre 64 est connu sous l'acronyme ESKF (Error State Kalman Filter) car il estime des corrections à apporter à la position, l'orientation et la vitesse estimées par le sous-module 60. Plus précisément, le filtre 64 fournit, pour chaque instant $t_m$, un vecteur d'état $X_{m|m}$. Le vecteur d'état $X_{m|m}$ contient notamment les coefficients de correction à utiliser pour corriger la position $P_e(m)$, l'orientation $O_e(m)$ et la vitesse $V_e(m)$. Pour chaque instant $t_m$, l'additionneur 66 combine les coefficients de correction fournis par le filtre 64 avec la position $P_e(m)$, l'orientation $O_e(m)$ et la vitesse $V_e(m)$ pour obtenir la position corrigée $P_c(m)$, l'orientation corrigée $O_c(m)$ et la vitesse corrigée $V_c(m)$. Pour chaque instant $t_k$ postérieur à l'instant $t_m$ et antérieur à l'instant $t_{m+1}$, aucune correction n'est apportée aux estimations construites par le sous-module 60.

Par exemple, ici, le vecteur d'état $X_{m|m}$ contient des coefficients de correction $\delta_x(m)$, $\delta_y(m)$ et $\delta_z(m)$ des coordonnées, respectivement, $x_e(m)$, $y_e(m)$ et $z_e(m)$ de la position $P_e(m)$. L'additionneur 66 ajoute ces coefficients $\delta_x(m)$, $\delta_y(m)$ et $\delta_z(m)$, respectivement, aux coordonnées $x_e(m)$, $y_e(m)$ et $z_e(m)$ pour obtenir les coordonnées, respectivement, $x_c(m)$, $y_b(m)$ et $z_c(m)$ de la position corrigée $P_c(m)$.

Le vecteur d'état $X_{m|m}$ comporte aussi des coefficients de correction $\delta_\psi(m)$, $\delta_\theta(m)$ et $\delta_\phi(m)$, respectivement, des coordonnées $\psi_\theta(m)$, $\theta_e(m)$ et $\varphi_e(m)$ de l'orientation $O_e(m)$. L'additionneur 66 ajoute ces coefficients $\delta_\psi(m)$, $\delta_\theta(m)$ et $\delta_\phi(m)$, respectivement, aux coordonnées $\psi_e(m)$, $\theta_e(m)$ et $\varphi_e(m)$ pour obtenir les coordonnées corrigées, respectivement, $\psi_c(m)$, $\theta_c(m)$ et $\varphi_c(m)$ de l'orientation $O_c(m)$.

De façon similaire, le vecteur d'état $X_{m|m}$ comporte aussi trois coefficients de correction $\delta v_x(m)$, $\delta v_y(m)$ et $\delta v_z(m)$ utilisés pour corriger, respectivement, les coordonnées $Vx_e(m)$, $Vy_e(m)$ et $Vz_e(m)$ de la vitesse $V_e(m)$.

Classiquement, le vecteur d'état $X_{m|m}$ comporte aussi des coefficients de correction pour corriger d'autres paramètres comme des biais de mesure de l'accéléromètre 44 et du gyromètre 46 ou autres. Dans ce mode de réalisation, le vecteur d'état $X_{m|m}$ contient en plus :

- trois coefficients de correction $\delta ba_x(m)$, $\delta ba_y(m)$ et $\delta ba_z(m)$ pour corriger les biais de mesure de l'accéléromètre 44 dans les directions, respectivement, $x_b$, $y_b$ et $z_b$,
- trois coefficients de correction $\delta bg_x(m)$, $\delta bg_y(m)$ et $\delta bg_z(m)$ pour corriger les biais de mesure du gyromètre 46 autour des axes parallèles, respectivement, aux directions $x_b$, $y_b$ et $z_b$.

Dans ce mode de réalisation, le vecteur d'état $X_{m|m}$ est donc le vecteur suivant à quinze coordonnées : $[\delta_\psi(m), \delta_\theta(m), \delta_\varphi(m), \delta v_x(m), \delta v_y(m), \delta v_z(m), \delta_x(m), \delta_y(m), \delta_z(m), \delta ba_x(m), \delta ba_y(m), \delta ba_z(m), \delta bg_x(m), \delta bg_y(m), \delta bg_z(m)]^T$, où le symbole "$T$" est le symbole de l'opération transposée.

Le filtre 64 est un algorithme récursif qui, pour chaque instant $t_m$, fournit à l'additionneur 66 un nouveau vecteur d'état $X_{m|m}$ calculé à partir :

- du précédent vecteur d'état $X_{m-1|m-1}$,
- de la mesure de l'unité 40 ou de la nouvelle distance corrigée acquise à l'instant $t_m$, et

- de la position $P_e(m)$, de l'orientation $O_e(m)$ et de la vitesse $V_e(m)$ construites par le sous-module 60 pour l'instant $t_m$.

Classiquement, le filtre 64 comporte un bloc 68 de prédiction calculant un premier vecteur d'état $X_{m|m-1}$ à partir du vecteur $X_{m-1|m-1}$ suivi d'un bloc 70 de mise à jour calculant le vecteur $X_{m|m}$ à partir du vecteur $X_{m|m-1}$ prédit. Ces blocs sont exécutés l'un après l'autre pour chaque vecteur $X_{m|m}$.

Plus précisément, le bloc 68 construit une prédiction $X_{m|m-1}$ du vecteur d'état à partir du précédent vecteur d'état $X_{m-1|m-1}$.

Ici, un exemple de mode de réalisation des blocs 68 et 70 est décrit dans le cas particulier où le filtre 64 est un filtre de Kalman étendue connue sous l'acronyme EKF ("Extended Kalman Filter").

L'équation de propagation ou de prédiction de l'état du filtre 64 mise en oeuvre par le bloc 68 est définie par la relation (1) suivante :

$$X_{m|m-1} = A_{m-1}X_{m-1|m-1}$$

où :

- $X_{m-1|m-1}$ est l'estimation du vecteur d'état à l'instant $t_{m-1}$ obtenue en prenant en compte toutes les mesures jusqu'à l'instant $t_{m-1}$,
- $X_{m|m-1}$ est la prédiction du vecteur d'état à l'instant $t_m$ obtenue en prenant en compte toutes les mesures jusqu'à l'instant $t_{m-1}$ et sans prendre en compte les mesures acquises à l'instant $t_m$,
- $A_{m-1}$ est la matrice de transition d'états à l'instant $t_{m-1}$.

Dans le cas particulier décrit ici où le filtre 64 est un "Error State Kalman Filter", le vecteur $X_{m-1|m-1}$ est toujours nul car on suppose que l'erreur avait été corrigée précédemment. Autrement dit, la relation (1) est ramenée à la relation suivante : $X_{m|m-1} = 0$.

L'équation de propagation ou de prédiction de la matrice de covariance de l'erreur mise en oeuvre par le bloc 68 est définie par la relation (2) suivante :

$$P_{m|m-1} = A_{m-1}P_{m-1|m-1}A_{m-1}^T + Q_{m-1}$$

où :

- $P_{m-1|m-1}$ est l'estimation de la matrice de covariance de l'erreur à l'instant $t_{m-1}$ obtenue en prenant en compte toutes les mesures acquises jusqu'à l'instant $t_{m-1}$,
- $P_{m|m-1}$ est la prédiction de la matrice de covariance $P_m$ à l'instant $t_m$ obtenue en prenant seulement en compte les mesures acquises jusqu'à l'instant $t_{m-1}$,
- $Q_{m-1}$ est la matrice de covariance du bruit de processus v.

Le bloc 70 corrige la prédiction $X_{m|m-1}$ du vecteur d'état de manière à obtenir le vecteur d'état $X_{m|m}$. Le vecteur $X_{m|m}$ corrigé est construit en fonction d'un écart $Y_m$ entre :

- une estimation $\hat{z}_m$ d'une grandeur physique à l'instant $t_m$, et
- la mesure $z_m$ de cette même grandeur physique à l'instant $t_m$.

L'écart $Y_m$ est connu sous le nom de "innovation". Ici, les grandeurs physiques mesurées sont la position et la vitesse mesurées par l'unité 40 et, en alternance, la distance corrigée délivrée par le sous-module 61. Ainsi, pour chaque instant $tg_i$, le bloc 70 corrige la prédiction $X_{m|m-1}$ uniquement à partir de la mesure de l'unité 40 acquise à cet instant $tg_i$. Réciproquement, pour chaque instant $to_j$, le bloc 70 corrige la prédiction $X_{m|m-1}$ uniquement à partir de la distance corrigée acquise à cet instant $to_j$. La correction de la prédiction $X_{m|m-1}$, aux instants $tg_i$, en fonction des écarts de position et de vitesse est réalisée, par exemple, comme décrit dans Godha2006. Ainsi, cette fonctionnalité du bloc 70 n'est pas décrite plus en détail. Seule la correction de la prédiction $X_{m|m-1}$, aux instants $to_j$, en fonction de la distance corrigée est décrite ci-dessous.

Dans cet exemple de réalisation, la grandeur physique est la distance corrigée $dc_m$. L'estimation $\hat{z}_m$ de la distance corrigée $dc_m$ est construite à l'aide de la relation (3) suivante :

$$\hat{z_m} = \sqrt{\left(x_e(m) - B_x\right)^2 + \left(y_e(m) - B_y\right)^2 + \left(z_e(m) - B_z\right)^2}$$

où :

- m est le numéro d'ordre d'un instant $t_m$ de la suite $\{0, t_1, t_2, ..., t_{m-1}, t_m, ...\}$ où une nouvelle distance corrigée est acquise,
- $x_e(m)$, $y_e(m)$ et $z_e(m)$ sont les coordonnées de la position $P_e(m)$ estimée par le sous-module 60 et exprimées dans le repère $R_T$,
- $B_x$, $B_y$, $B_z$ sont les coordonnées de la position de l'émetteur-récepteur 22 dans le repère $R_T$.

Les coordonnées $B_x$, $B_y$, $B_z$ sont constantes et pré-enregistrées dans la mémoire 54.

L'innovation $Y_m$ est obtenue à l'aide de la relation (4) suivante : $Y_m = dc_m - \hat{z_m}$.

Typiquement, le bloc 70 corrige la prédiction $X_{m|m-1}$ en y ajoutant l'innovation $Y_m$ multipliée par le gain $K_m$ de Kalman. Le gain $K_m$ est calculé à l'aide de la relation (5) suivante : $K_m = P_{m|m-1}H_m^T (H_m P_{m|m-1}H_m^T + R_m)^{-1}$, où :

- la matrice $R_m$ est la matrice de covariance du bruit sur la distance corrigée, et
- $H_m$ est une matrice d'observation.

La matrice d'observation $H_m$ est fonction de la dérivée partielle de la relation (3) par rapport aux différents paramètres du vecteur d'état $X_{m|m}$. La matrice $R_m$ est par exemple constante et initialisée à l'aide de données sur la covariance du bruit sur les mesures des instants d'émission et de réception obtenus par l'émetteur-récepteur 20.

Ensuite, le vecteur d'état $X_{m|m}$ est obtenu à l'aide de la relation (6) suivante : $X_{m|m} = X_{m|m-1} + K_m Y_m$.

La matrice mise à jour de covariance de l'erreur à l'instant $t_m$ est calculée à l'aide de la relation (7) suivante : $P_{m|m} = (I - K_m H_m)P_{m|m-1}$, où I est la matrice identité.

La matrice $P_{m|m}$ contient les marges d'erreur sur les estimations des coefficients de corrections.

Dans ce mode de réalisation particulier, l'additionneur 66 est un simple additionneur qui ajoute à la position $P_e(k)$, à l'orientation $O_e(k)$ et à la vitesse $V_e(k)$ les coefficients de corrections correspondant contenus dans le vecteur d'état $X_{m|m}$. Ensuite, l'additionneur 66 délivre sur la sortie 37 la position $P_c(k)$, l'orientation $O_c(k)$ et la vitesse $V_c(k)$ corrigées ainsi obtenues.

Le fonctionnement du système 30 va maintenant être décrit en référence au procédé de la figure 4.

Le procédé débute par une phase 100 de calibration. Lors de cette phase 100 les fonctions $f_{Sn}$ de correction associées à chacun des segments S1 à S4 sont déterminées.

Pour cela, lors d'une étape 102, le véhicule 2 parcourt la totalité du segment S1 en partant du point A jusqu'au point B.

En parallèle de l'étape 102, lors d'une étape 104, les émetteurs-récepteurs 20 et 22 échangent des trames d'informations pour permettre la mesure d'une distance brute entre ces émetteurs-récepteurs 20, 22 à partir des instants d'émission et de réception de ces trames d'informations. Chaque échange de trames d'informations permet d'acquérir suffisamment d'instants d'émission et de réception pour calculer une distance brute entre ces émetteurs-récepteurs 20 et 22. Par exemple, ici, ces échanges sont déclenchés périodiquement à la fréquence $F_{20}$. Chaque échange se déroule donc au cours d'une période $T_{20,j}$ respective.

Dans cet exemple de réalisation, c'est la méthode de mesure de distance aller-retour qui est implémentée. Cette méthode de mesure de distance est plus connue sous le terme anglais de « two-way ranging ». Selon cette méthode, chaque échange comporte :

- l'émission par l'émetteur-récepteur 20 d'une première trame d'informations, puis
- en réponse à la réception de cette première trame d'informations par l'émetteur-récepteur 22, l'émission par l'émetteur-récepteur 22 d'une seconde trame d'informations.

La première trame d'informations est émise à un instant $M_{1,j}$ et reçue par l'émetteur-récepteur 22 à un instant $M_{2,j}$. La seconde trame d'informations est émise à un instant $M_{3,j}$ et reçue par l'émetteur-récepteur 20 à un instant $M_{4,j}$.

Les instants $M_{1,j}$ et $M_{4,j}$ sont mesurés par l'émetteur-récepteur 20. Les instants $M_{2,j}$ et $M_{3,j}$ sont mesurés par l'émetteur-récepteur 22. Puisque l'instant $M_{3,j}$ est mesuré par l'émetteur-récepteur 22, il ne peut pas être transmis à l'émetteur-récepteur 20 dans la seconde trame d'informations émise à cet instant. Ici, les instants $M_{2,j}$ et $M_{3,j}$ mesurés par l'émetteur-récepteur 22 sont transmis à l'émetteur-récepteur 20 dans la seconde trame d'informations transmise au cours de la période suivante $T_{20,j+1}$. A cause de ce retard, l'instant $to_j$ auquel le sous-module 62 acquière la distance

$dc_j$ intervient bien après la fin de la période $T_{20,j}$.

Lorsque l'émetteur-récepteur 20 a mesuré les instants $M_{1,j}$ et $M_{4,j}$ et reçu les mesures $M_{2,j}$ et $M_{3,j}$, lors d'une étape 106, l'émetteur-récepteur 20 transmet ces mesures au sous-module 61.

En réponse, lors d'une étape 108, le sous-module 61 calcule une distance brute $db_j$ uniquement à partir des instants d'émission et de réception mesurés pendant la période $T_{20,j}$. Ici, la distance $db_j$ est calculée à l'aide de la relation (8) suivante :

$$db_j = c \cdot \frac{\left(M_{4,j} - M_{3,j}\right) + \left(M_{2,j} - M_{1,j}\right)}{2}$$

où le symbole "c" désigne la vitesse de la lumière. Par la suite, sauf indication contraire, le symbole "." dans une relation mathématique désigne l'opération arithmétique de multiplication.

En parallèle des étapes 104 à 108, lors d'une étape 110, et lors de chaque période $T_{20,j}$, une distance précise $dp_j$ est mesurée sans utiliser les instants d'émission et de réception des trames d'informations. Pour cela, des mesures sont réalisées par un autre capteur indépendant des émetteurs-récepteurs 20 et 22. Typiquement, cet autre capteur est utilisé uniquement pendant la phase 100 de calibration. Il doit avoir une précision meilleure, et typiquement deux fois ou dix fois meilleure, que celle sur la mesure de la distance brute $db_j$. Par exemple, cet autre capteur est un télémètre optique installé temporairement le long des segments S1 à S4.

Lors d'une étape 112, une fois que les distances $db_j$ et $dp_j$ ont été obtenues pour une multitude de positions différentes du véhicule 2 le long du segment S1, une fonction $f_{S1}$ de correction qui renvoie le coefficient de correction permettant de corriger la distance $db_j$ est déterminée. Pour cela, pour chaque paire de distances $db_j$ et $dp_j$, une erreur $ed_j$ entre ces distances $db_j$ et $dp_j$ est calculée. La fonction $f_{S1}$ est paramétrée par la valeur d'une grandeur physique choisie dans le groupe constitué :

- de la distance d entre les émetteurs-récepteurs 20 et 22, et
- d'une grandeur physique représentative de la puissance des signaux radio reçus.

Dans cet exemple de réalisation, la fonction $f_{S1}$, est paramétrée par la distance d et donc notée $f_{S1}(d)$.

Ici, la fonction $f_{S1}(d)$ est définie par la relation (9) suivante :

$$f_{s1}(d) = a_{s1} \cdot \frac{d}{\sqrt{d_{0,s1}^2 + d^2}} + b_{s1}$$

où $a_{s1}$, $b_{s1}$ et $d_{0,s1}$ sont des constantes. Cette fonction $f_{s1}(d)$ est entièrement définie dès que les valeurs des constantes $a_{s1}$, $b_{s1}$ et $d_{0,s1}$ sont connues. Ici, pour déterminer la fonction $f_{s1}(d)$, les valeurs des constantes $a_{s1}$, $b_{s1}$ et $d_{0,s1}$ qui minimisent l'écart suivant pour toutes les distances $dp_j$ mesurées sont calculées : $|f_{s1}(dp_j) - ed_j|$. Par exemple, pour cela, un solveur numérique est utilisé.

Une fois la fonction $f_{S1}(d)$ déterminée, celle-ci est associée au segment S1 dans la table 58. Par exemple, pour cela, les valeurs des constantes $a_{s1}$, $b_{s1}$ et $d_{0,s1}$ sont associées au segment S1 par la table 58.

Les étapes précédentes qui ont été décrites dans le cas particulier du segment S1 sont réitérées pour chacun des segments de sorte qu'à l'issue de la phase 100, la table 58 comporte une fonction de correction associée à chacun des segments S1 à S4. Le plus souvent, les fonctions de correction ainsi déterminées sont toutes différentes les unes des autres.

Après la phase 100 de calibration, le système 30 est utilisé pour déterminer une distance corrigée $dc_j$ entre les émetteurs-récepteurs 20 et 22 et pour localiser le véhicule 2.

L'utilisation du système 30 pour localiser le véhicule 2 débute par une phase 120 d'initialisation du système 30. Cette phase 120 débute immédiatement après l'activation du système 30, c'est-à-dire typiquement juste après qu'il ait été mis sous tension. Lors de cette phase 120 les différentes variables et paramètres nécessaires à l'exécution du module 56 sont initialisées. Par exemple, les valeurs initiales de la position, de la vitesse et de l'orientation du véhicule 2 et des coefficients de correction sont initialisées. Il existe de nombreux algorithmes qui permettent d'obtenir rapidement ces valeurs initiales.

Une fois la phase 120 d'initialisation terminée, une phase 130 d'exécution du module 56 débute.

Lors d'une étape 136, à chaque fois que des nouvelles mesures de l'unité 42 sont acquises par le calculateur 50, le module 56 détermine et actualise la position, l'orientation et la vitesse du véhicule 2. Ainsi, cette actualisation est réalisée pour chaque instant $t_k$.

Plus précisément, l'étape 136 comporte une opération 138 lors de laquelle l'accéléromètre 44 et le gyromètre 46 mesurent, respectivement, l'accélération et la vitesse angulaire du véhicule 2 et ces nouvelles mesures sont acquises par le calculateur 50 à l'instant $t_k$.

Ensuite, lors d'une opération 140, le sous-module 60 construit les estimations brutes $P_e(k)$, $O_e(k)$ et $V_e(k)$ à partir :

- de la précédente position $P(k-1)$, de la précédente orientation $O(k-1)$ et de la précédente vitesse $V(k-1)$, et
- des mesures de l'accéléromètre 44 et du gyromètre 46 acquises à l'instant $t_k$.

En parallèle de l'étape 136, une étape 150 de détermination de la distance entre les émetteurs-récepteurs 20, 22 est exécutée. Cette étape 150 est réitérée à la fréquence $F_{20}$ pour mettre à la disposition du sous-module 62 une nouvelle distance corrigée $dc_j$ à chaque instant $to_j$.

L'étape 150 comporte successivement les opérations suivantes :

- une opération 152 d'échange de trames d'informations entre les émetteurs-récepteurs 20, 22,
- une opération 154 de transmission des instants $M_{1,j}$, $M_{2,j}$, $M_{3,j}$ et $M_{4,j}$ au calculateur 50 et d'acquisition de ces instants par le sous-module 61,
- une opération 156 de calcul de la distance brute $db_j$,
- une opération 158 d'identification du segment sur lequel se trouve le véhicule 2 parmi les segments S1 à S4,
- une opération 160 de sélection de la fonction de correction associée au segment identifié,
- une opération 162 d'exécution de la fonction de correction sélectionnée, puis
- une opération 164 de correction de la distance brute $db_j$ pour obtenir la distance corrigée $dc_j$.

Les opérations 152, 154 et 156 sont identiques, respectivement, aux étapes 104, 106 et 108.

Lors de l'opération 158, pour identifier le segment sur lequel se trouve actuellement le véhicule 2, le sous-module 61 utilise la dernière position du véhicule 2 estimée par le sous-module 60. Par contre, dans cet exemple de réalisation, les coordonnées des segments S1 à S4 ne sont pas utilisées. Pour cela, des vecteurs directeurs $u_v$ et $u_b$ sont associés, respectivement, aux émetteurs-récepteurs 20 et 22. Le vecteur $u_v$ est fixe par rapport au châssis du véhicule 2. Ainsi, ce vecteur $u_v$ bouge uniquement si l'orientation du véhicule bouge. Le vecteur $u_b$ est fixe par rapport à l'émetteur-récepteur 22. Puisque l'émetteur-récepteur 22 est immobile, le vecteur $u_b$ ne bouge pas. Le choix des directions dans lesquelles pointent les vecteurs $u_v$ et $u_b$ est un choix arbitraire. En effet, ces vecteurs $u_v$ et $u_b$ sont simplement utilisés pour repérer l'orientation relative des émetteurs-récepteurs 20, 22.

Dans cet exemple de réalisation, pour simplifier les calculs, les vecteurs $u_v$ et $u_b$ sont horizontaux. Toujours pour simplifier les calculs, le vecteur $u_v$ est choisi comme étant parallèle à la direction $x_b$ du repère $R_b$ et de sens opposé à la direction $x_b$. Ici, le vecteur $u_b$ est choisi comme étant parallèle et de même sens que le vecteur $u_v$ lorsque le véhicule se trouve sur le segment S1.

Dans ces conditions, les coordonnées du vecteur $u_v$ sont données par la relation suivante :

$$u_v = \begin{bmatrix} \cos(\psi_v) & \sin(\psi_v) & 0 \end{bmatrix}^T$$

où l'angle $\psi_v$ est l'angle de lacet du véhicule 2 obtenu à partir de la dernière orientation $O_e(k)$ estimée par le sous-module 60.

Le vecteur $u_b$ est quant à lui défini par la relation suivante :

$$u_b = \begin{bmatrix} \cos(\psi_b) & \sin(\psi_b) & 0 \end{bmatrix}^T$$

où l'angle $\psi_b$ est l'angle de lacet de l'émetteur-récepteur 22. L'angle $\psi_b$ est une constante car l'émetteur-récepteur 22 est fixe.

Lors de l'opération 158, le sous-module 61 calcule les coordonnées d'un vecteur directeur $u_{bv}$ qui pointe du centre géométrique de l'antenne de l'émetteur-récepteur 22 vers le centre géométrique de l'antenne de l'émetteur-récepteur 20. Les coordonnées de ce vecteur $u_{bv}$ sont données par la relation suivante :

$$u_{bv} = \frac{\left[ x_e(k) - B_x \quad y_e(k) - B_y \quad z_e(k) - B_z \right]^T}{\left\| \left[ x_e(k) - B_x \quad y_e(k) - B_y \quad z_e(k) - B_z \right] \right\|}$$

où :

- $x_e(k)$, $y_e(k)$ et $z_e(k)$ sont les coordonnées de la position actuelle $P_e(k)$ du véhicule 2, et
- $B_x$, $B_y$, $B_z$ sont les coordonnées de la position de l'émetteur-récepteur 22.

Ensuite, le sous-module 61 calcule les cosinus d'un angle d'arrivée $\alpha_v$ et d'un angle de départ $\alpha_b$ à l'aide des relations suivantes :

$$\cos\left(\alpha_v\right) = -u_{bv}^{\;T} . u_v$$

et

$$\cos\left(\alpha_b\right) = u_{bv}^{\;T} . u_b$$

Finalement, le sous-module 61 identifie le segment sur lequel se trouve le véhicule 2 à partir des signes des cosinus des angles $\alpha_v$ et $\alpha_b$ en utilisant une table préenregistrée telle que la table suivante :

| Signe de $\cos(\alpha_v)$ | Signe de $\cos(\alpha_b)$ | Segment correspondant |
|---|---|---|
| - | + | S1 |
| + | - | S2 |
| - | - | S3 |
| + | + | S4 |

Cette table permet d'obtenir le segment identifié à partir des signes des $\cos(\alpha_v)$ et $\cos(\alpha_b)$ calculés. Les signes dans les colonnes de cette table résultent de choix arbitraires quant à la définition des vecteurs directeurs $u_v$ et $u_b$. Ce tableau doit donc être adapté en fonction de ces choix. La seule chose réellement importante est de conserver les mêmes conventions entre l'instant où cette table est construite et les instants où cette table est utilisée.

Lors de l'opération 160, le sous-module 61 sélectionne la fonction de correction associée par la table 58 au segment identifié lors de l'opération 158.

Lors de l'opération 162, le sous-module 61 exécute la fonction de correction sélectionnée. Pour cela, par exemple, il calcule une distance d entre les émetteurs-récepteurs 20, 22 à partir de la dernière position $P_e(k)$ estimée pour le véhicule 2 et des coordonnées de l'émetteur-récepteur 22. Ensuite, il exécute la fonction de correction sélectionnée paramétrée par la valeur de cette distance d. Le sous-module 61 obtient ainsi un coefficient de correction Cd.

Enfin, lors de l'opération 164, le sous-module 61 calcule la distance corrigée $dc_j$ à l'aide de la relation suivante : $dc_j = db_j - Cd$. C'est cette distance $dc_j$ qui est acquise par le sous-module 62 à l'instant $to_j$.

Ensuite, seulement si l'instant $t_k$ est en plus un instant $tg_i$ où une mesure de l'unité 40 est acquise, après l'étape 136, le calculateur 50 exécute une étape 170 de mise à jour des coefficients de correction en fonction de la nouvelle mesure de l'unité 40. Lors de cette étape 170 la mise à jour des coefficients de correction est réalisée sans utiliser les instants d'émission et de réception obtenus par l'émetteur-récepteur 20.

Seulement si l'instant $t_k$ est un instant $to_j$ où une distance corrigée $dc_j$ est acquise, après l'étape 136, le calculateur 50 exécute une étape 180 de mise à jour des coefficients de correction en fonction de la nouvelle distance corrigée $dc_j$. Lors de cette étape 180 la mise à jour des coefficients de correction est réalisée sans utiliser la mesure de l'unité 40.

Si l'instant $t_k$ ne correspond ni à un instant $tg_i$ ni à un instant $to_j$, alors la position $P_e(k)$, l'orientation $O_e(k)$ et à la vitesse $V_e(k)$ estimées par le sous-module 60 et non corrigé par le sous-module 62 sont délivrées sur la sortie 37. Ainsi aux instants $t_k$ situés entre les instants $t_m$, c'est la position $P_e(k)$, l'orientation $O_e(k)$ et la vitesse $V_e(k)$ qui sont délivrées sur la sortie 37. De plus, le procédé retourne à l'étape 136 sans exécuter ni l'étape 170 ni l'étape 180. Dans ce cas, la précédente position, la précédente orientation et de la précédente vitesse utilisées lors de la prochaine itération de l'étape 136 sont égales, respectivement, à la position $P_e(k)$, l'orientation $O_e(k)$ et à la vitesse $V_e(k)$.

Lors de l'étape 180, le sous-module 62 commence par acquérir, lors d'une opération 201, la nouvelle distance corrigée $dc_j$.

Ensuite, lors d'une opération 202, le bloc 68 est exécuté par le calculateur 50 pour obtenir le vecteur d'état prédit $X_{m|m-1}$ à partir de la précédente estimation $X_{m-1|m-1}$ de ce vecteur d'état. La précédente estimation $X_{m-1|m-1}$ est celle obtenue au précédent instant $t_{m-1}$. Le précédent instant $t_{m-1}$ correspond soit à un instant $tg_i$ soit à l'instant $to_{j-1}$. Dès lors la précédente estimation $X_{m-1|m-1}$ est celle qui a été construite soit lors de la précédente exécution de l'étape 170 soit lors de la précédente exécution de l'étape 180. La prédiction $X_{m|m-1}$ du vecteur d'état est construite en mettant en oeuvre la relation (1). Dans ce cas particulier où le filtre 64 est un "error-state Kalman filter", la prédiction $X_{m|m-1}$ est systématiquement nulle.

Lors de l'opération 202, le bloc 68 construit aussi la prédiction $P_{m|m-1}$ de la matrice de covariance $P_m$ à l'instant $t_m$ en mettant en oeuvre la relation (2).

Lors d'une opération 206, le bloc 70 construit l'estimation $\hat{z}_m$ de la distance entre les émetteurs-récepteurs 20, 22 en mettant en oeuvre la relation (3). Dans ce mode de réalisation, lors de l'opération 206, le bloc 70 calcule aussi la matrice d'observation $H_m$. La matrice $H_m$ est, par exemple, calculée en dérivant la relation (3) par rapport à chacun des différents paramètres du vecteur d'état $X_{m|m}$.

Lors de l'opération suivante 208, le bloc 70 met à jour les coefficients de correction. Pour cela, il corrige la prédiction $X_{m|m-1}$ en fonction de l'écart $Y_m$ entre la distance corrigée $dc_j$ et son estimation $\hat{z}_m$. A cet effet, le bloc 70 calcule l'écart $Y_m$ selon la relation (4). Ensuite, le gain $K_m$ est calculé à l'aide de la relation (5). Le vecteur d'état corrigé $X_{m|m}$ est alors obtenu en mettant en oeuvre la relation (6).

Lors de l'opération 208, le bloc 70 obtient également la matrice $P_{m|m}$ de covariance mise à jour à l'aide de la relation (7).

A l'issue des étapes 170 et 180, lors d'une étape 210, le sous-module 62 corrige la position $P_e(m)$, l'orientation $O_e(m)$ et la vitesse $V_e(m)$ pour obtenir la position corrigée $P_c(m)$, l'orientation corrigée $O_c(m)$ et la vitesse corrigée $V_c(m)$.

Pour cela, l'additionneur 66 ajoute les coefficients de correction contenus dans le vecteur $X_{m|m}$ aux coordonnées correspondantes de la position $P_e(m)$, de l'orientation $O_e(m)$ et de la vitesse $V_e(m)$, construite lors de la dernière exécution de l'opération 136, pour obtenir la position $P_c(m)$, l'orientation $O_c(m)$ et la vitesse $V_c(m)$. Ainsi, uniquement aux instants $t_m$, ce sont la position $P_c(m)$, l'orientation $O_c(m)$ et la vitesse $V_c(m)$ qui sont délivrées sur la sortie 37 et non pas la position $P_e(m)$, l'orientation $O_e(m)$ et la vitesse $V_e(m)$. De plus, lors de l'étape 210, la position $P(k)$, l'orientation $O(k)$ et la vitesse $V(k)$ sont transmises au sous-module 60 et utilisées par le sous-module 60 comme précédente position, précédente orientation et précédente vitesse du véhicule 2 lors de la prochaine itération de l'étape 136.

Après l'étape 210, le procédé retourne à l'étape 136.

Chapitre II : Variantes

Variantes de la détermination de la distance :

D'autres méthodes de mesure de la distance brute $db_j$ à partir des instants d'émission et de réception de trames d'informations entre les émetteurs-récepteurs 20 et 22 peuvent être implémentées. Par exemple, en variante, la méthode de mesure de la distance aller-retour est remplacée par une méthode de mesure de distance avec deux allers et un retour connue sous le terme anglais de « three-way ranging ». Dans cette méthode « three-way ranging », chaque échange de trames d'informations entre les émetteurs-récepteurs 20 et 22 comporte, en plus de l'émission des première et seconde trames d'informations, l'émission par l'émetteur-récepteur 20, en réponse à la réception de la seconde trame d'informations, d'une troisième trame d'informations à un instant $M_{5,j}$ et la réception de cette troisième trame d'informations par l'émetteur-récepteur 22 à un instant $M_{6,j}$. Dans ce cas, la distance brute $db_j$ est calculée à l'aide de la relation suivante :

$$db_j = c \cdot \frac{1}{2 + \varepsilon^{AB}}\left(\left(M_{3,j} - M_{2,j}\right) + \left(1 + \varepsilon^{AB}\right)\left(M_{4,j} - M_{1,j}\right)\right)$$

où $\varepsilon^{AB}$ est défini par la relation suivante :

$$\varepsilon^{AB} = \frac{\left(M_{6,j} - M_{2,j}\right)}{\Delta T} - 1$$

où $\Delta T$ est égale à $M_{5,j}$ - $M_{1,j}$.

Les mesures des instants $M_{2,j}$ et $M_{3,j}$ peuvent être transmises à l'émetteur-récepteur 20 par d'autres moyens que la seconde trame d'informations émise au cours de la période $T_{20,j+1}$. Par exemple, ces instants $M_{2,j}$ et $M_{3,j}$ sont transmis à l'émetteur-récepteur 20 par l'intermédiaire d'une trame d'informations supplémentaire dont les instants d'émission et de réception ne sont pas utilisés pour le calcul de la distance $db_j$. Dans un autre mode de réalisation, cette trame supplémentaire est transmise par l'intermédiaire d'une liaison de transmission d'information établie à l'aide d'émetteurs-récepteurs indépendants des émetteurs-récepteurs 20 et 22.

En variante, les émetteurs-récepteurs 20 et 22 sont capables de réaliser une mesure grossière et une mesure fine des instants de réception. Dans ce cas, cette possibilité peut être mise à profit, par exemple, selon le schéma suivant. La technologie UWB utilise un indicateur connu sous l'acronyme FPI (« First Path Index »). Cet indicateur est construit par les émetteurs-récepteurs 20, 22. Cet indicateur doit normalement être compris entre des limites hautes $L_H$ et basses $L_B$. Lorsque cet indicateur est entre les limites $L_H$ et $L_B$, c'est la mesure fine qui est utilisée. À l'inverse, si cet indicateur n'est pas compris entre ces limites $L_H$ et $L_B$, c'est la valeur grossière qui est utilisée.

En variante, le calcul de la distance brute $db_j$ prend en compte la dérive de l'horloge située dans l'émetteur-récepteur 20 par rapport à l'horloge située dans l'émetteur-récepteur 22. Ces horloges sont utilisées pour mesurer les instants d'émission et de réception des trames d'informations. Pour cela, par exemple, la distance brute $db_j$ est calculée à l'aide de la relation suivante :

$$db_j = c \cdot \frac{\left(M_{4,j} - M_{1,j}\right) - \left(M_{3,j} - M_{2,j}\right)\left(1 + \varepsilon_{drift,j}\right)}{2}$$

où $\varepsilon_{drift,j}$ est défini par la relation suivante :

$$\varepsilon_{drift,j} = \frac{\Delta T_{remote,j} - \Delta T_{local,j}}{\Delta T_{remote,j}}$$

où $\Delta T_{remote,j} = M_{2,j} - M_{2,j-1}$ et $\Delta T_{local,j} = M_{1,j} - M_{1,j-1}$.

Les rôles des émetteurs-récepteurs 20 et 22 peuvent être inversés. Dans ce cas, c'est l'émetteur-récepteur 22 qui émet la première trame d'informations à l'instant $M_{1,j}$ et, en réponse à la réception de cette première trame d'informations, l'émetteur-récepteur 20 émet la second trame d'informations à l'instant $M_{3,j}$. Dans ce mode de réalisation, les instants $M_{2,j}$ et $M_{3,j}$ sont mesurés par l'émetteur-récepteur 20 et les instants $M_{1,j}$ et $M_{4,j}$ sont mesurés par l'émetteur-récepteur 22. L'émetteur-récepteur 22 transmet les instants $M_{1,j}$ et $M_{4,j}$ mesurés à l'émetteur-récepteur 20, par exemple, dans la première trame d'informations transmise à l'instant $M_{1,j+1}$.

En variante, les coordonnées $B_x$, $B_y$ et $B_z$ de la position de l'émetteur-récepteur fixe 22 sont contenues dans une trame d'informations, par exemple la seconde trame d'informations, transmise de l'émetteur-récepteur 22 vers l'émetteur-récepteur 20. Dans ce cas, ces coordonnées n'ont pas besoin d'être enregistrées au préalable dans la mémoire 54.

D'autres modes de réalisation des fonctions de correction sont possibles. En particulier, d'autres formes sont possibles pour chaque fonction de correction que celle représentée dans la relation (9). Par exemple, la fonction de correction peut être entièrement définie par les valeurs de quatre constantes au lieu de trois. Par exemple, la fonction de correction peut être un polynôme du troisième ou du second degré ou un quotient entre deux polynômes du premier degré. En particulier, il est possible d'utiliser des fonctions de correction qui sont entièrement définies par moins de trois constantes. Par exemple, dans ce cas, la fonction de correction est un polynôme du premier degré ou une constante. Dans ce dernier cas, le coefficient de correction est constant et indépendant de la distance d.

Lors de l'opération 162, la valeur de la distance d utilisée pour exécuter la fonction de correction sélectionnée peut être obtenue différemment. Par exemple, la distance d est prise égale à la distance $db_j$ calculée lors de l'opération 156.

En variante, la fonction de correction est paramétrée par la valeur d'une grandeur physique représentative de la puissance du signal radio reçu par les émetteurs-récepteurs 20, 22. Cette grandeur physique peut être directement la puissance du signal radio reçu ou une autre grandeur physique qui représente cette puissance. Par exemple, à titre d'illustration, cette grandeur physique peut aussi être le ratio signal sur bruit, un gain, un nombre de symboles pilotes utilisés ou autres. Dans le cas où la fonction de correction est paramétrée par une grandeur physique représentative de la puissance du signal radio reçu, lors de la phase 100 de calibration, cette grandeur physique est mesurée pour chaque position où la distance $dp_j$ est mesurée. Ensuite, ces mesures de cette grandeur physique sont utilisées pour déterminer les différentes constantes qui définissent la fonction la fonction de correction.

Dans une autre variante, la fonction de correction est paramétrée à la fois par la distance d et par la grandeur physique représentative de la puissance des signaux radio reçus.

Bien que le cas le plus commun est que toutes les fonctions de correction déterminées soient différentes les unes des autres, il peut aussi arriver que les fonctions de corrections associées à deux ou plusieurs segments soient identiques.

D'autres méthodes d'identification du segment sur lequel se trouve le véhicule 2 sont possibles. Par exemple, en variante, le segment sur lequel se trouve le véhicule 2 est identifié en comparant la position actuelle $P_e(k)$ du véhicule 2 aux coordonnées des différents segments S1 à S4. Par exemple, dans le cas où les segments S1 à S4 sont des segments de droite, le sous-module 61 vérifie que la position $P_e(k)$ appartient à l'un de ces segments de droite. Pour cela, les équations définissant chacun de ces segments de droite sont, par exemple, utilisées. Dans ce dernier cas, l'orientation $O_e(k)$ du véhicule 2 n'est pas nécessaire pour identifier le segment sur lequel se trouve actuellement le véhicule 2. Dans une autre variante, la position actuelle $P_e(k)$ permet de déterminer l'abscisse curviligne du véhicule 2 par rapport à un point de référence. Cette abscisse curviligne permet alors d'identifier le segment sur lequel se trouve le véhicule 2 en le comparant aux abscisses curvilignes des points de départ et d'arrivée de chaque segment.

Le nombre de segments prédéterminés peut être différents de quatre. Par exemple, dans un mode de réalisation simplifié, il est égal à deux. Un tel cas est obtenu si les segments S1 et S2 sont remplacés par un seul segment qui s'étend du point A jusqu'au point C et si les segments S3 et S4 sont remplacés par un seul segment qui s'étend du point D jusqu'au point F. Dans une autre variante, le nombre de segments prédéterminés associés à l'émetteur-récepteur 22 est supérieur à quatre.

Variantes du filtre de Kalman :

De nombreux autres modes de réalisation du filtre 64 sont possibles. Par exemple, le filtre 64 peut être un filtre de Kalman linéaire, un filtre de Kalman étendu ou EKF (« Extended Kalman Filter »), un filtre UKF (« Unscented Kalman Filter ») ou encore un filtre de Kalman adaptatif.

De nombreuses variantes des relations mises en oeuvre dans le filtre de Kalman existent. En effet, ces relations dépendent du repère dans lequel la position, l'orientation et la vitesse du véhicule sont exprimées. Or d'autres repères sont utilisables à la place du repère $R_T$. Par exemple, on peut citer le repère ECI (Earth Centered Inertial). Le repère ECI n'est pas fixe par rapport à la surface de la terre puisque la terre tourne dans ce repère. Le repère $R_T$ peut aussi être un repère fixe par rapport aux étoiles. Lorsqu'un autre repère est utilisé, il est possible, par un simple changement de repère, de revenir dans la situation décrite ici.

Les relations du filtre de Kalman peuvent aussi contenir une matrice de rotation supplémentaire pour tenir compte du fait que les axes de mesure de l'unité 42 ne sont pas alignés sur les axes du repère $R_b$.

De même, de nombreuses variantes du vecteur d'état $X_{m|m}$ sont possibles. Par exemple, le vecteur d'état $X_{m|m}$ peut aussi ne pas comporter de coefficient de correction des biais de l'accéléromètre 44 et du gyromètre 46. Le vecteur d'état $X_{m|m}$ peut aussi comporter des variables d'état supplémentaires.

Ce qui a été précédemment enseigné dans le cas particulier où le sous-module 62 de correction utilise un ou plusieurs filtres de Kalman s'applique aussi à des sous-modules de correction qui construisent les coefficients de correction en utilisant d'autres estimateurs que des filtres de Kalman. De façon générale, ce qui a été décrit ici s'applique à tout sous-module de correction configuré pour mettre à jour les coefficients de correction en utilisant un écart entre :

- une mesure d'une grandeur physique construite à partir de la distance corrigée $dc_j$, et
- une estimation de cette grandeur physique construite à partir des mesures de l'unité 42.

D'autres modes de réalisation du sous-module 62 sont possibles. Par exemple, en variante, le sous-module 62 est agencé comme décrit dans l'architecture connue sous le nom anglais de « tight coupling ». Cette architecture est décrite plus en détail dans le chapitre 4.1.2 de la thèse Godha2006.

Variantes du système de localisation :

En variante, les émetteurs-récepteurs 20, 22 ne sont pas des émetteurs-récepteurs UWB. Par exemple, les émetteurs-récepteurs 20, 22 sont remplacés par des émetteurs-récepteurs radio qui utilisent un spectre de fréquences beaucoup plus étroit pour échanger les trames d'informations.

En variante, le système 30 est équipé de capteurs supplémentaires, comme par exemple un magnétomètre, un baromètre ou un odomètre. Dans ce cas, le sous-module 62 de correction est modifié pour prendre en compte les mesures de ces capteurs supplémentaires pour corriger les estimations brutes délivrées par le sous-module 60 d'intégration.

Dans un autre mode de réalisation, l'unité 40 de géolocalisation par satellite est omise. Dans ce cas, par exemple, les coefficients de correction sont mis à jour uniquement à partir des distances corrigées dc$_j$.

En variante, le système de localisation du véhicule 2 comporte un seul émetteur-récepteur fixe ou, au contraire plusieurs émetteurs-récepteurs fixes. Dans le cas où le système comporte plusieurs émetteurs-récepteurs fixes, ceux-ci sont de préférence répartis à intervalle régulier le long de la trajectoire ou le long d'une portion de cette trajectoire. Dans ce dernier cas, si l'émetteur-récepteur mobile 20 peut simultanément communiquer avec plusieurs émetteurs-récepteurs fixes, alors au lieu de fournir à un instant to$_j$ une seule distance corrigée, le sous-module 61 fournit simultanément plusieurs distances corrigées, chacune de ces distances correspondant à une distance entre l'émetteur-récepteur 20 et un émetteur-récepteur fixe respectif. Ensuite, le sous-module 62 corrige l'estimation de la position en prenant en compte ces différentes distances et les positions connues des différents émetteurs-récepteurs fixes.

En variante, le calculateur électronique 50 n'est pas logé à l'intérieur du véhicule 2 mais ailleurs. Par exemple, le calculateur électronique 50 est logé à l'intérieur d'une borne fixe qui contient déjà l'émetteur-récepteur 22.

Variantes du procédé :

Le procédé décrit ici pour déterminer la distance corrigée dc$_j$ peut être utilisé dans d'autres procédés que des procédés de localisation d'un véhicule. En particulier, la distance corrigée dc$_j$ peut être utilisée à d'autres fins que celle consistant à corriger une estimation de la position du véhicule. Par exemple, le procédé de détermination de la distance corrigée dc$_j$ est mis en oeuvre seule dans le cas où seule la distance entre les émetteurs-récepteurs 20, 22 doit être déterminée. Dans un tel cas, la position du véhicule est déterminée par tout moyen comme par exemple en utilisant seulement l'unité 40 de géolocalisation par satellite ou tout autre capteur capable de déterminer la position du véhicule 2 indépendamment des mesures des instants d'émission et de réception des trames d'informations échangées entre les émetteurs-récepteurs 20, 22.

La position, l'orientation et la vitesse du véhicule 2 peuvent être déterminées par d'autres procédés que ceux mettant en oeuvre un algorithme de fusion comme précédemment décrit. Dans ce cas, l'algorithme de fusion est remplacé par un autre algorithme qui remplit la même fonction et qui permet la détermination de la position du véhicule 2. Ainsi, dans des variantes simplifiées, seule la position du véhicule 2 est estimée.

La position du véhicule 2 peut être déterminée à partir des mesures d'une ou plusieurs autres unités de mesure. Par exemple, ces unités de mesure sont choisies dans le groupe constitué :

- de l'unité 40 de géolocalisation par satellite,
- de l'unité 42 de mesure inertielle,
- d'un odomètre,
- d'un magnétomètre associé à une cartographie des champs magnétiques terrestres.

Ainsi, ce qui a été décrit peut aussi être mis en oeuvre dans un système de localisation dans lequel les unités 40 et 42 sont remplacées par un ou plusieurs autres capteurs à partir desquels la position du véhicule 2 peut être déterminée.

En variante, il est possible qu'au même instant t$_m$, une nouvelle mesure de l'unité 40 et une nouvelle distance corrigée soient acquises. Autrement dit, en variante, les instants tg$_i$ et to$_j$ peuvent être concomitants. Dans ce cas, le calculateur 50 exécute une mise à jour des coefficients de correction en fonction à la fois des nouvelles mesures de l'unité 40 et de la nouvelle distance corrigée. Par exemple, pour cela, le calculateur 50 calcule un nouveau gain K$_m$ en fonction d'une matrice d'observation formée par la concaténation de la matrice H$_m$ et de la matrice d'observation utilisée pour mettre à jour les coefficients de correction en fonction de la mesure de l'unité 40.

Dans un autre mode de réalisation, la distance corrigée est ajoutée au vecteur d'état du filtre de Kalman et les matrices d'état et d'observation sont modifiées en conséquence. Toutefois, un tel mode de réalisation impose alors d'exécuter le filtre de Kalman à chaque instant t$_k$ ce qui n'est pas toujours souhaitable.

Autres variantes :

Le véhicule 2 n'est pas nécessairement une télécabine. Ce qui a été décrit s'applique à tout véhicule contraint de se déplacer sur un nombre dénombrable de segments prédéterminés. Par exemple, le système 30 peut être appliqué au cas où le véhicule est un véhicule automobile. Dans ce cas, chaque segment correspond à l'une des voies de circulation. Si la route comporte plus de deux voies, alors, de préférence, plus de deux segments prédéterminés sont utilisés afin que chaque segment corresponde à une voie respective. Le système 30 peut aussi être appliqué à un véhicule ferroviaire. Dans ce dernier cas, les voies sont des voies de chemin de fer.

En variante, les différents segments prédéterminés associés à un même émetteur-récepteur fixe ne sont pas parallèles les uns aux autres. Une telle situation peut se rencontrer lorsque les segment correspondent à des segments de voies ferrées ou de circulation qui se croisent à proximité du même émetteur-récepteur fixe.

En variante, lorsque le véhicule 2 parcourt un segment de trajectoire, il peut s'écarter légèrement de la trajectoire de référence parcourue par ce véhicule lors de la phase 100 de calibration sans que cela dégrade la précision de la distance corrigée dc$_j$. Ici, un écart entre la trajectoire actuelle du véhicule 2 et la trajectoire de référence est considéré comme léger si, en tout point A de la trajectoire actuelle, l'écart $|\theta_v - \theta_{ref}|$ est inférieur à 10° ou 5°, où :

- $\theta_v$ est l'angle entre les vecteurs directeurs $u_v$ et $u_b$ précédemment définis lorsque le véhicule est situé au point A de la trajectoire actuelle, et
- $\theta_{ref}$ est l'angle entre les vecteurs directeurs $u_v$ et $u_b$ lorsque le véhicule est situé sur le point de la trajectoire de référence le plus proche du point A actuel.

En variante, le poste 38 de pilotage est embarqué à l'intérieur du véhicule 2. C'est notamment le cas lorsque le véhicule 2 est, par exemple, un véhicule automobile ou un véhicule ferroviaire.

Dans un mode de réalisation simplifié, le système 30 ne délivre pas la vitesse du véhicule 2. Dans ce cas, le module 56 peut être simplifié.

Chapitre III : Avantages des modes de réalisations décrits

Le fait d'utiliser plusieurs fonctions de correction chacune associées à un segment respectif de la trajectoire permet de déterminer, sur chacun de ces segments, une fonction de correction qui est à la fois simple et rapide à exécuter tout en restant précise. De plus, ces fonctions de correction sont plus simples à établir. En effet, le nombre de valeurs que chacune de ces fonctions de correction doit approximer aussi précisément que possible est bien plus petit que le nombre total de valeur à approximer le long de la trajectoire complète du véhicule 2. Le fait que le nombre de valeurs à approximer est beaucoup plus petit permet, à précision égale, d'utiliser une fonction de correction plus simple à mettre en oeuvre et plus rapide à exécuter. Dès lors, en associant à chacun des segments une fonction de correction respective, il est possible de simplifier la mise en oeuvre du procédé sans dégrader la précision, voire même en l'améliorant. De plus, le nombre de segments reste faible puisque le véhicule est contraint de se déplacer le long d'un nombre limité de segments.

Dans le contexte où la distance corrigée dc$_j$ est utilisée pour localiser un véhicule, le fait de simplifier la mise en oeuvre de la détermination de cette distance corrigée sans en dégrader la précision permet également de ne pas dégrader la précision de la position déterminée pour le véhicule.

Le fait de paramétrer la fonction de correction par la distance d entre les émetteurs-récepteurs 20 et 22 ou en fonction d'une grandeur physique représentative de la puissance des signaux radio reçus améliore la précision de la distance corrigée dc$_j$.

Le fait que la fonction de correction soit paramétrée par la distance d plutôt que par une grandeur physique représentative de la puissance des signaux radio reçus permet également d'accroître encore plus la précision de la distance dc$_j$.

Le fait que la fonction de correction soit entièrement définie par au plus trois constantes simplifie la détermination de cette fonction de correction lors de la phase 100 de calibration. De plus, une telle fonction de calibration est alors simple à mettre en oeuvre sans pour autant dégrader la précision de la distance corrigée dc$_j$.

**Revendications**

1. Procédé de détermination d'une distance corrigée entre un émetteur-récepteur mobile fixé sur un véhicule et un émetteur-récepteur fixe, ce procédé comportant les étapes suivantes lorsque le véhicule se déplace le long d'un segment de trajectoire appartenant à un ensemble dénombrable de plusieurs segments prédéterminés de trajectoire:

   a) l'acquisition (154), par un calculateur électronique, des instants d'émission et de réception de signaux radio échangés entre les émetteurs-récepteurs fixe et mobile,

   b) le calcul (156), par le calculateur électronique, d'une distance brute entre les émetteurs-récepteurs fixe et mobile seulement à partir des instants acquis d'émission et de réception des signaux radio échangés, puis

   c) la détermination (136, 210), par le calculateur électronique, de la position du véhicule,

   **caractérisé en ce que** le procédé comporte :

   - l'identification (158), parmi l'ensemble des segments prédéterminés de trajectoire, du segment prédéterminé sur lequel se trouve actuellement le véhicule à partir de la dernière position déterminée pour ce véhicule, puis
   - la sélection (160) d'une fonction de correction spécifiquement associée au segment identifié à l'aide d'une table qui associe, à chaque segment de trajectoire, une fonction de correction respective, chacune de ces fonctions de correction étant apte, lorsqu'elle est exécutée, à fournir un coefficient de correction de la distance brute, puis
- l'exécution (162) de la fonction de correction identifiée pour obtenir un coefficient de correction actuel, puis
- la correction (164) de la dernière distance brute calculée à l'aide du coefficient de correction actuel pour obtenir la distance corrigée.

2. Procédé selon la revendication 1, dans lequel :

    - chaque fonction de correction :

        - est paramétrée par une première grandeur physique pour que le coefficient de correction fourni varie en fonction de la valeur de cette première grandeur physique même lorsque le véhicule reste à l'intérieur du même segment prédéterminé, cette première grandeur physique étant choisie dans le groupe constitué :

            - de la distance entre les émetteurs-récepteurs fixe et mobile, et
            - d'une grandeur physique représentative de la puissance des signaux radio reçus, et

        - est différente d'au moins une des autres fonctions de correction en ce que, pour une même valeur de la première grandeur physique, elle fournit un coefficient de correction différent,

    - le procédé comporte l'obtention de la valeur actuelle de la première grandeur physique, et
    - l'exécution (162) de la fonction de correction identifiée comporte l'exécution de la fonction de correction identifiée paramétrée avec la valeur actuelle obtenue de la première grandeur physique pour obtenir le coefficient de correction actuel.

3. Procédé selon la revendication 2, dans lequel la première grandeur physique est la distance entre les émetteurs-récepteurs fixe et mobile.

4. Procédé selon la revendication 2 ou 3, dans lequel le procédé comporte une phase (100) de calibration lors de laquelle, pour chaque segment prédéterminé de trajectoire et pour différentes positions du véhicule sur ce segment prédéterminé de trajectoire :

    - une distance brute entre les émetteurs-récepteurs fixe et mobile est calculée (108) seulement à partir des instants acquis d'émission et de réception des signaux radio échangés, et
    - pour la même position du véhicule, une distance précise est mesurée (110) à l'aide d'un autre capteur qui permet d'obtenir une mesure de la distance plus précise que la distance brute et sans utiliser les instants acquis d'émission et de réception des signaux radio échangés, puis
    - la détermination (112) d'une fonction de correction qui approxime l'évolution de l'erreur entre la distance brute calculée et la distance précise mesurée en fonction de la valeur de la première grandeur physique, et
    - l'association de cette fonction de correction à ce segment prédéterminé de trajectoire.

5. Procédé selon l'une quelconque des revendications précédentes, dans lequel la fonction de correction associée à un segment prédéterminé est entièrement définie par les valeurs de N constantes, où N est inférieur ou égal à quatre.

6. Procédé selon la revendication 5, dans lequel chaque fonction de correction est définie par la relation suivante :

$$f_{sn}(d) = a_{sn} \cdot \frac{d}{\sqrt{d_{0,sn}^2 + d^2}} + b_{sn}$$

où $a_{sn}$, $b_{sn}$ et $d_{0,sn}$ sont les trois constantes qui définissent entièrement la fonction de correction.

7. Procédé selon l'une quelconque des revendications précédentes, dans lequel les signaux radio sont des signaux ultra large bande.

8. Procédé de localisation d'un véhicule se déplaçant le long d'un segment de trajectoire appartenant à un ensemble dénombrable de plusieurs segments prédéterminés de trajectoire, ce procédé comportant les étapes suivantes :

- la détermination (150), par un calculateur électronique, d'une distance corrigée entre un émetteur-récepteur mobile fixé sur le véhicule et un émetteur-récepteur fixe situé le long des segments prédéterminés de trajectoire,
- l'acquisition, par un calculateur électronique, d'une mesure d'une deuxième grandeur physique qui varie en fonction de la position du véhicule, cette mesure étant réalisée par un capteur indépendant des émetteurs-récepteurs fixe et mobile, puis
- la détermination (136, 210), par le calculateur électronique, de la position du véhicule à partir de la mesure acquise de la deuxième grandeur physique et de la distance corrigée déterminée,

**caractérisé en ce que** lors de la détermination de la distance corrigée entre les émetteurs-récepteurs fixe et mobile, cette distance corrigée est déterminée en mettant en oeuvre un procédé de détermination de cette distance corrigée conforme à l'une quelconque des revendications précédentes.

9. Procédé selon la revendication 8, dans lequel l'acquisition d'une mesure de la deuxième grandeur physique comporte l'acquisition d'une mesure choisie dans le groupe constitué :

- d'une mesure de l'accélération du véhicule réalisée par une unité de navigation inertielle, et
- d'une mesure de la position ou de la vitesse du véhicule réalisée par une unité de géolocalisation par satellite.

10. Procédé selon la revendication 9, dans lequel :

- l'acquisition d'une mesure de la deuxième grandeur physique comporte :

  - l'acquisition d'une mesure de l'accélération du véhicule réalisée par une unité de navigation inertielle, et
  - l'acquisition d'une mesure de la vitesse angulaire du véhicule réalisée par l'unité de navigation inertielle, et

- le procédé comporte en plus la détermination (136, 210), par le calculateur électronique, de l'orientation du véhicule à partir des mesures acquises de l'accélération et de la vitesse angulaire du véhicule et de la distance corrigée déterminée.

11. Système de détermination d'une distance corrigée entre un émetteur-récepteur mobile fixé sur un véhicule et un émetteur-récepteur fixe, ce système comportant un calculateur électronique (50) configuré pour exécuter les étapes suivantes lorsque le véhicule se déplace le long d'un segment de trajectoire appartenant à un ensemble dénombrable de plusieurs segments prédéterminés de trajectoire :

- l'acquisition, par le calculateur électronique, des instants d'émission et de réception de signaux radio échangés entre les émetteurs-récepteurs fixe et mobile,
- le calcul, par le calculateur électronique, d'une distance brute entre les émetteurs-récepteurs fixe et mobile seulement à partir des instants acquis d'émission et de réception des signaux radio échangés, puis
- la détermination, par le calculateur électronique, de la position du véhicule, **caractérisé en ce que** le calculateur électronique (50) est également configuré pour exécuter les opérations suivantes :
- l'identification, parmi l'ensemble des segments prédéterminés de trajectoire, du segment prédéterminé sur lequel se trouve actuellement le véhicule à partir de la dernière position déterminée pour ce véhicule, puis
- la sélection d'une fonction de correction spécifiquement associée au segment identifié à l'aide d'une table qui associe, à chaque segment de la trajectoire, une fonction de correction respective, chacune de ces fonctions de correction étant apte, lorsqu'elle est exécutée, à fournir un coefficient de correction de la distance brute, puis
- l'exécution de la fonction de correction identifiée pour obtenir un coefficient de correction actuel, puis
- la correction de la dernière distance brute calculée à l'aide du coefficient de correction actuel pour obtenir la distance corrigée.

**Patentansprüche**

1. Verfahren zur Bestimmung eines korrigierten Abstands zwischen einem mobilen Sendeempfänger, der an einem Fahrzeug befestigt ist, und einem stationären Sendeempfänger, wobei dieses Verfahren die folgenden Schritte umfasst, wenn sich das Fahrzeug entlang eines Bahnsegments fortbewegt, das zu einer abzählbaren Menge mehrerer vorbestimmter Bahnsegmente gehört:

a) Erfassen (154), durch eine elektronische Recheneinheit, der Sende- und Empfangszeitpunkte von Funksignalen, die zwischen dem stationären und dem mobilen Sendeempfänger ausgetauscht werden,

b) Berechnen (156), durch die elektronische Recheneinheit, eines Grobabstands zwischen dem stationären und dem mobilen Sendeempfänger nur auf Grundlage der erfassten Sende- und Empfangszeitpunkte der ausgetauschten Funksignale, dann

c) Bestimmen (136, 210), durch die elektronische Recheneinheit, der Position des Fahrzeugs,

**dadurch gekennzeichnet, dass** das Verfahren Folgendes umfasst:

- Identifizieren (158), innerhalb der Menge der vorbestimmten Bahnsegmente, desjenigen vorbestimmten Segments, auf dem sich das Fahrzeug aktuell befindet, anhand der letzten für dieses Fahrzeug bestimmten Position, dann

- Auswählen (160) einer dem identifizierten Segment speziell zugeordneten Korrekturfunktion mit Hilfe einer Tabelle, die jedem Bahnsegment eine jeweilige Korrekturfunktion zuordnet, wobei jede dieser Korrekturfunktionen dazu fähig ist, wenn sie ausgeführt wird, einen Korrekturkoeffizienten für den Grobabstand bereitzustellen, dann

- Ausführen (162) der identifizierten Korrekturfunktion, um einen aktuellen Korrekturkoeffizienten zu erhalten, dann

- Korrigieren (164) des letzten berechneten Grobabstands mit Hilfe des aktuellen Korrekturkoeffizienten, um den korrigierten Abstand zu erhalten.

2. Verfahren nach Anspruch 1, wobei:

- jede Korrekturfunktion:

- durch eine erste physikalische Größe parametriert wird, damit der bereitgestellte Korrekturkoeffizient in Abhängigkeit von dem Wert dieser ersten physikalischen Größe variiert, selbst wenn das Fahrzeug innerhalb desselben vorbestimmten Segments bleibt, wobei diese erste physikalische Größe aus der Gruppe ausgewählt wird, die aus Folgendem besteht:

- dem Abstand zwischen dem stationären und dem mobilen Sendeempfänger und

- einer physikalischen Größe, die für die Leistung der empfangenen Funksignale repräsentativ ist, und

- sich von mindestens einer der anderen Korrekturfunktionen dahingehend unterscheidet, dass sie für einen gleichen Wert der ersten physikalischen Größe einen unterschiedlichen Korrekturkoeffizienten bereitstellt,

- das Verfahren das Erhalten des aktuellen Werts der ersten physikalischen Größe umfasst und

- das Ausführen (162) der identifizierten Korrekturfunktion das Ausführen der identifizierten Korrekturfunktion, die mit dem erhaltenen aktuellen Wert der ersten physikalischen Größe parametriert ist, umfasst, um den aktuellen Korrekturkoeffizienten zu erhalten.

3. Verfahren nach Anspruch 2, wobei die erste physikalische Größe der Abstand zwischen dem stationären und dem mobilen Sendeempfänger ist.

4. Verfahren nach Anspruch 2 oder 3, wobei das Verfahren eine Phase (100) des Kalibrierens umfasst, während der für jedes vorbestimmte Bahnsegment und für unterschiedliche Positionen des Fahrzeugs auf diesem vorbestimmten Bahnsegment:

- ein Grobabstand zwischen dem stationären und dem mobilen Sendeempfänger nur auf Grundlage der erfassten Sende- und Empfangszeitpunkte der ausgetauschten Funksignale berechnet wird (108) und

- für die gleiche Position des Fahrzeugs ein präziser Abstand mit Hilfe eines anderen Sensors gemessen wird (110), der es gestattet, eine präzisere Messung des Abstands als den Grobabstand zu erhalten, ohne dabei die erfassten Sende- und Empfangszeitpunkte der ausgetauschten Funksignale zu verwenden, dann

- Bestimmen (112) einer Korrekturfunktion, die die Entwicklung des Fehlers zwischen dem berechneten Grobabstand und dem gemessenen präzisen Abstand in Abhängigkeit von dem Wert der ersten physikalischen Größe approximiert, und

- Zuordnen dieser Korrekturfunktion zu diesem vorbestimmten Bahnsegment.

5. Verfahren nach einem beliebigen der vorhergehenden Ansprüche, wobei die einem vorbestimmten Segment zugeordnete Korrekturfunktion durch die Werte von N Konstanten vollständig definiert wird, wobei N kleiner als oder gleich vier ist.

**6.** Verfahren nach Anspruch 5, wobei jede Korrekturfunktion durch die folgende Gleichung definiert wird:

$$f_{sn}(d) = a_{sn} \cdot \frac{d}{\sqrt{d_{0,sn}^2 + d^2}} + b_{sn}$$

wobei $a_{sn}$, $b_{sn}$ und $d_{0,sn}$ die drei Konstanten sind, die die Korrekturfunktion vollständig definieren.

**7.** Verfahren nach einem beliebigen der vorhergehenden Ansprüche, wobei die Funksignale Ultrabreitbandsignale sind.

**8.** Verfahren zur Lokalisierung eines Fahrzeugs, das sich entlang eines Bahnsegments fortbewegt, das zu einer abzählbaren Menge mehrerer vorbestimmter Bahnsegmente gehört, wobei dieses Verfahren die folgenden Schritte umfasst:

- Bestimmen (150), durch eine elektronische Recheneinheit, eines korrigierten Abstands zwischen einem mobilen Sendeempfänger, der an dem Fahrzeug befestigt ist, und einem stationären Sendeempfänger, der sich entlang der vorbestimmten Bahnsegmente befindet,
- Erfassen, durch eine elektronische Recheneinheit, einer Messung einer zweiten physikalischen Größe, die in Abhängigkeit von der Position des Fahrzeugs variiert, wobei diese Messung durch einen Sensor durchgeführt wird, der von dem stationären und dem mobilen Sendeempfänger unabhängig ist, dann
- Bestimmen (136, 210), durch die elektronische Recheneinheit, der Position des Fahrzeugs anhand der erfassten Messung der zweiten physikalischen Größe und des bestimmten korrigierten Abstands,

**dadurch gekennzeichnet, dass** bei der Bestimmung des korrigierten Abstands zwischen dem stationären und dem mobilen Sendeempfänger dieser korrigierte Abstand durch Umsetzung eines Verfahrens zur Bestimmung dieses korrigierten Abstands nach einem beliebigen der vorhergehenden Ansprüche bestimmt wird.

**9.** Verfahren nach Anspruch 8, wobei das Erfassen einer Messung der zweiten physikalischen Größe das Erfassen einer Messung umfasst, die aus der Gruppe ausgewählt wird, die aus Folgendem besteht:

- einer Messung der Beschleunigung des Fahrzeugs, die durch eine Trägheitsnavigationseinheit durchgeführt wird, und
- einer Messung der Position oder der Geschwindigkeit des Fahrzeugs, die durch eine satellitengestützte Ortungseinheit durchgeführt wird.

**10.** Verfahren nach Anspruch 9, wobei:

- das Erfassen einer Messung der zweiten physikalischen Größe Folgendes umfasst:
- das Erfassen einer Messung der Beschleunigung des Fahrzeugs, die durch eine Trägheitsnavigationseinheit durchgeführt wird, und
- das Erfassen einer Messung der Winkelgeschwindigkeit des Fahrzeugs, die durch die Trägheitsnavigationseinheit durchgeführt wird, und
- das Verfahren ferner das Bestimmen (136, 210), durch die elektronische Recheneinheit, der Ausrichtung des Fahrzeugs anhand der erfassten Messungen der Beschleunigung und der Winkelgeschwindigkeit des Fahrzeugs und des bestimmten korrigierten Abstands umfasst.

**11.** System zur Bestimmung eines korrigierten Abstands zwischen einem mobilen Sendeempfänger, der an einem Fahrzeug befestigt ist, und einem stationären Sendeempfänger, wobei dieses System eine elektronische Recheneinheit (50) umfasst, die dazu konfiguriert ist, die folgenden Schritte auszuführen, wenn sich das Fahrzeug entlang eines Bahnsegments fortbewegt, das zu einer abzählbaren Menge mehrerer vorbestimmter Bahnsegmente gehört:

- Erfassen, durch die elektronische Recheneinheit, der Sende- und Empfangszeitpunkte von Funksignalen, die zwischen dem stationären und dem mobilen Sendeempfänger ausgetauscht werden,
- Berechnen, durch die elektronische Recheneinheit, eines Grobabstands zwischen dem stationären und dem mobilen Sendeempfänger nur auf Grundlage der erfassten Sende- und Empfangszeitpunkte der ausgetauschten Funksignale, dann
- Bestimmen, durch die elektronische Recheneinheit, der Position des Fahrzeugs, **dadurch gekennzeichnet,**

**dass** die elektronische Recheneinheit (50) ferner dazu konfiguriert ist, die folgenden Operationen auszuführen:
- Identifizieren, innerhalb der Menge der vorbestimmten Bahnsegmente, desjenigen vorbestimmten Segments, auf dem sich das Fahrzeug aktuell befindet, anhand der letzten für dieses Fahrzeug bestimmten Position, dann
- Auswählen einer dem identifizierten Segment speziell zugeordneten Korrekturfunktion mit Hilfe einer Tabelle, die jedem Segment der Bahn eine jeweilige Korrekturfunktion zuordnet, wobei jede dieser Korrekturfunktionen dazu fähig ist, wenn sie ausgeführt wird, einen Korrekturkoeffizienten für den Grobabstand bereitzustellen, dann
- Ausführen der identifizierten Korrekturfunktion, um einen aktuellen Korrekturkoeffizienten zu erhalten, dann
- Korrigieren des letzten berechneten Grobabstands mit Hilfe des aktuellen Korrekturkoeffizienten, um den korrigierten Abstand zu erhalten.

**Claims**

1. Method for determining a corrected distance between a mobile transceiver fastened to a vehicle and a fixed transceiver, this method comprising the following steps when the vehicle is moving along a path segment belonging to a countable set of a plurality of predetermined path segments:

   a) acquisition (154), by an electronic computer, of transmission and reception times of radio signals exchanged between the fixed and mobile transceivers,
   b) computation (156), by the electronic computer, of a raw distance between the fixed and mobile transceivers solely from the acquired transmission and reception times of the exchanged radio signals, then
   c) determination (136, 210), by the electronic computer, of the position of the vehicle, wherein the method comprises:

   - identification (158), among the set of predetermined path segments, of the predetermined segment on which the vehicle is currently found on the basis of the last position determined for this vehicle, then
   - selection (160) of a correction function specifically associated with the identified segment using a table that associates, with each path segment, a respective correction function, each of these correction functions being able, when it is executed, to deliver a correction coefficient for correcting the raw distance, then
   - execution (162) of the identified correction function to obtain a current correction coefficient, then
   - correction (164) of the last raw distance computed using the current correction coefficient to obtain the corrected distance.

2. Method according to Claim 1, wherein:

   - each correction function:

     - is parametrized by a first physical quantity so that the delivered correction coefficient varies as a function of the value of this first physical quantity even when the vehicle remains inside the same predetermined segment, this first physical quantity being chosen from the group made up:

       - of the distance between the fixed and mobile transceivers, and
       - of a physical quantity representative of the power of the received radio signals, and

     - is different from at least one of the other correction functions in that, for a given value of the first physical quantity, it delivers a different correction coefficient,

   - the method comprises obtaining the current value of the first physical quantity, and
   - the execution (162) of the identified correction function comprises execution of the identified correction function parametrized with the obtained current value of the first physical quantity to obtain the current correction coefficient.

3. Method according to Claim 2, wherein the first physical quantity is the distance between the fixed and mobile transceivers.

4. Method according to Claim 2 or 3, wherein the method comprises a calibrating phase (100) in which, for each predetermined path segment and for various positions of the vehicle on this predetermined path segment:

- a raw distance between the fixed and mobile transceivers is computed (108) solely from the acquired transmission and reception times of the exchanged radio signals, and
- for the same vehicle position, an accurate distance is measured (110) using another sensor that allows a distance measurement that is more accurate than the raw distance to be obtained without using the acquired transmission and reception times of the exchanged radio signals, then
- determination (112) of a correction function that approximates the variation in the error between the computed raw distance and the measured accurate distance depending on the value of the first physical quantity, and
- association of this correction function with this predetermined path segment.

5. Method according to anyone of the preceding claims, wherein the correction function associated with a predetermined segment is entirely defined by the values of N constants, where N is lower than or equal to four.

6. Method according to Claim 5, wherein each correction function is defined by the following relationship:

$$f_{sn}(d) = a_{sn} \cdot \frac{d}{\sqrt{d_{0,sn}^2 + d^2}} + b_{sn}$$

where $a_{sn}$, $b_{sn}$ and $d_{0,sn}$ are three constants that entirely define the correction function.

7. Method according to anyone of the preceding claims, wherein the radio signals are ultra-wideband signals.

8. Method for locating a vehicle moving along a path segment belonging to a countable set of a plurality of predetermined path segments, this method comprising the following steps:

- determination (150), by an electronic computer, of a corrected distance between a mobile transceiver fastened to the vehicle and a fixed transceiver located along predetermined path segments,
- acquisition, by an electronic computer, of a measurement of a second physical quantity that varies as a function of the position of the vehicle, this measurement being taken by a sensor independent of the fixed and mobile transceivers, then
- determination, by an electronic computer, of the position of the vehicle from the acquired measurement of the second physical quantity and from the determined corrected distance,

wherein, during the determination of the corrected distance between the fixed and mobile transceivers, this corrected distance is determined by implementing a method for determining this corrected distance according to any one of the preceding claims.

9. Method according to Claim 8, wherein the acquisition of a measurement of the second physical quantity comprises acquisition of a measurement chosen from the group made up:

- of a measurement of the acceleration of the vehicle, taken by an inertial navigation system, and
- of a measurement of the position or speed of the vehicle, taken by a satellite geolocation unit.

10. Method according to Claim 9, wherein:

- the acquisition of a measurement of the second physical quantity comprises:

  - acquisition of a measurement of the acceleration of the vehicle, taken by an inertial navigation system, and
  - acquisition of a measurement of the angular velocity of the vehicle, taken by the inertial navigation system, and

- the method in addition comprises determination, by the electronic computer, of the orientation of the vehicle from the acquired measurements of the acceleration and angular velocity of the vehicle and of the determined corrected distance.

11. System for determining a corrected distance between a mobile transceiver fastened to a vehicle and a fixed transceiver, this system comprising an electronic computer (50) configured to execute the following steps when the vehicle is moving along a path segment belonging to a countable set of a plurality of predetermined path segments:

- acquisition, by the electronic computer, of transmission and reception times of radio signals exchanged between the fixed and mobile transceivers,
- computation, by the electronic computer, of a raw distance between the fixed and mobile transceivers solely from the acquired transmission and reception times of the exchanged radio signals, then
- determination, by the electronic computer, of the position of the vehicle,

wherein the electronic computer is also configured to execute the following operations:

- identification, among the set of predetermined path segments, of the predetermined segment on which the vehicle is currently found from the last position determined for this vehicle, then
- selection of a correction function specifically associated with the identified segment using a table that associates, with each segment of the path, a respective correction function, each of these correction functions being able, when it is executed, to deliver a correction coefficient for correcting the raw distance, then
- execution of the identified correction function to obtain a current correction coefficient, then
- correction of the last raw distance computed using the current correction coefficient to obtain the corrected distance.

Fig. 1

Fig. 4

Fig. 2

Fig. 3

## RÉFÉRENCES CITÉES DANS LA DESCRIPTION

**Documents brevets cités dans la description**

- WO 2021143920 A1

- US 2003216865 A1

**Littérature non-brevet citée dans la description**

- **V. DI PIETRA et al.** Loosely Coupled GNSS and UWB with INS Intégration for Indoor/Outdoor Pedestrian Navigation. *Sensors,* 05 Novembre 2020
- **WHENDA ZHAO et al.** Learning-based Bias Correction for Time Différence of Arrival Ultra-wideband Localization of Resource constrrained Mobile Robots. Cornell University Library, 02 Mars 2021

- **S. GODHA.** Performance Evaluation of Low Cost MEMS-Based IMU Integrated With GPS for Land Vehicle Navigation Application. *PhD report,* 2006